# EUROPEAN PATENT SPECIFICATION

(11) **EP 4 592 874 B1**
(45) Date of publication and mention of the grant of the patent: **13.05.2026**
(21) Application number: 25152448.4
(22) Date of filing: 17.01.2025
(51) Int. Cl.: G06F 21/31, G06F 21/41, H04L 9/40

(54) **PLATFORM AND PLATFORM OPERATING PROGRAM**
PLATTFORM UND BETRIEBSPROGRAMM FÜR DIE PLATTFORM
PLATE-FORME ET PROGRAMME D'EXPLOITATION DE PLATE-FORME

(30) Priority: 24.01.2024 JP 2024009083
(43) Date of publication of application: 30.07.2025
(73) Proprietor: KYOCERA Document Solutions Inc., Osaka-shi, Osaka, 540-8585 (JP)
(72) Inventor: MANABE, Hiroshi, Osaka-shi, Osaka, 540-8585 (JP); NAGANO, Daisaku, Osaka-shi, Osaka, 540-8585 (JP)
(74) Representative: Herrero & Asociados, S.L.

(56) References cited:
- EP-A1- 3 951 626
- US-A1- 2016 125 174
- US-A1- 2021 382 981

## Description

### BACKGROUND

The present invention relates to a platform serving as the basis for executing a plurality of web applications, and a platform operating program.

Web applications, to be utilized by a user who has logged in, are widely known.

The patent Document D1 (US 2021/382981 A1) discloses a service providing system that, upon receiving from a terminal device a request designating identification information of a user registered in a first tenant and identification information of an application, registers the user and the application in a second tenant as a user who can use the application.

The patent Document D2 (US 2016/125174 A1) discloses an information processing apparatus including an administration unit that administers whether a service is provided, using organization information, license information, and user information, and an account registration unit that, upon receiving a subscription for a trial use of the service, performs an account registration with the administration unit so that the trial use is enabled.

### SUMMARY

The invention proposes further improvement of the foregoing technique.

The invention is set out in the appended set of claims.

### BRIEF DESCRIPTION OF THE DRAWINGS

Fig. 1 is a block diagram showing a configuration of a system according to an embodiment of the invention;
Fig. 2 is a block diagram showing an example of a configuration of a platform;
Fig. 3 presents an example of an application management table;
Fig. 4 presents an example of an organization management table;
Fig. 5 presents an example of a user management table;
Fig. 6 presents an example of a group management table;
Fig. 7 presents an example of an apparatus management table;
Fig. 8 presents an example of a PIN management table;
Fig. 9 presents an example of an ID card management table;
Fig. 10 presents an example of a first storage management table;
Fig. 11 is a block diagram showing an example of a computer;
Fig. 12 is a block diagram showing an example of an image forming apparatus;
Fig. 13 is a flowchart showing an operation of the platform, performed when a user logs in;
Fig. 14 presents an example of a managing user top screen;
Fig. 15 is a flowchart showing an operation of the platform, performed when a contract period of a subscription contract expires;
Fig. 16 is a flowchart showing an operation of the platform, performed when a user setting button is pressed;
Fig. 17 is a flowchart showing an operation of the platform, performed when a storage setting button is pressed;
Fig. 18 presents an example of a general user top screen;
Fig. 19 is a flowchart showing an operation of the platform, performed when a PIN authentication setting button is pressed;
Fig. 20 presents an example of a log-in user PIN authentication setting region;
Fig. 21 presents an example of a log-in user ID card authentication setting region;
Fig. 22 is a flowchart showing an operation of the platform, performed when a storage setting button is pressed;
Fig. 23 presents an example of a log-in user first storage setting region and a log-in user second storage setting region; and
Fig. 24 and Fig. 25 each present an example of a managing user top screen.

### DETAILED DESCRIPTION

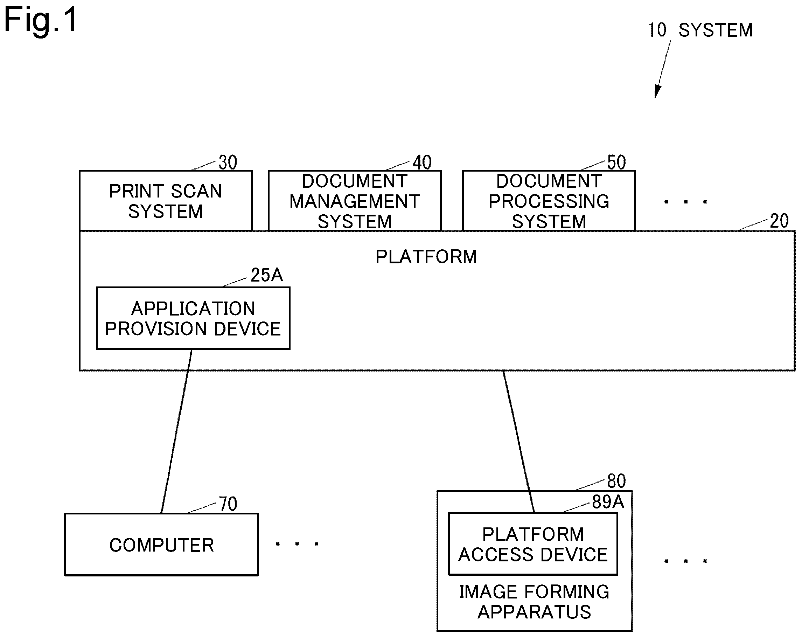

Hereafter, an embodiment of the invention will be described, with reference to the drawings. First, a configuration of a system 10 according to the embodiment will be described. Fig. 1 is a block diagram showing the configuration of the system 10.

As shown in Fig. 1, the system 10 includes a platform 20, serving as the basis for executing a plurality of web applications. The platform 20 may be constituted of a single computer such as a personal computer (PC), or a plurality of computers.

The system 10 includes a plurality of web applications that can be executed on the platform 20. Examples of the web applications included in the system 10, to be executed on the platform 20, include a print scan system 30, a document management system 40, and a document processing system 50. The print scan system 30 enables printing and scanning operations performed by an image forming apparatus 80 to be subsequently described. The document management system 40 is for managing documents. The document processing system 50 executes a specific processing with respect to an inputted document, and outputs the document to a specific destination.

The print scan system 30, the document management system 40, and the document processing system 50 may each be constituted of a single computer such as a PC, or a plurality of computers.

At least a part of each of at least two of the platform 20, the print scan system 30, the document management system 40, and the document processing system 50 may be constituted of the same single computer. The platform 20, the print scan system 30, the document management system 40, and the document processing system 50 may be set to operate on a cloud, such as Google (registered trademark) Cloud.

The system 10 includes a computer 70, for utilizing each of the print scan system 30, the document management system 40, and the document processing system 50 via the platform 20. The system 10 may additionally include one or more computers configured similarly to the computer 70. The computer 70 may be, for example, a PC, a smartphone, or a tablet.

The system 10 also includes an image forming apparatus 80, for utilizing each of the print scan system 30, the document management system 40, and the document processing system 50 via the platform 20. The system 10 may additionally include one or more image forming apparatuses configured similarly to the image forming apparatus 80. The image forming apparatus 80 may be, for example, configured as a multifunction peripheral (MPF).

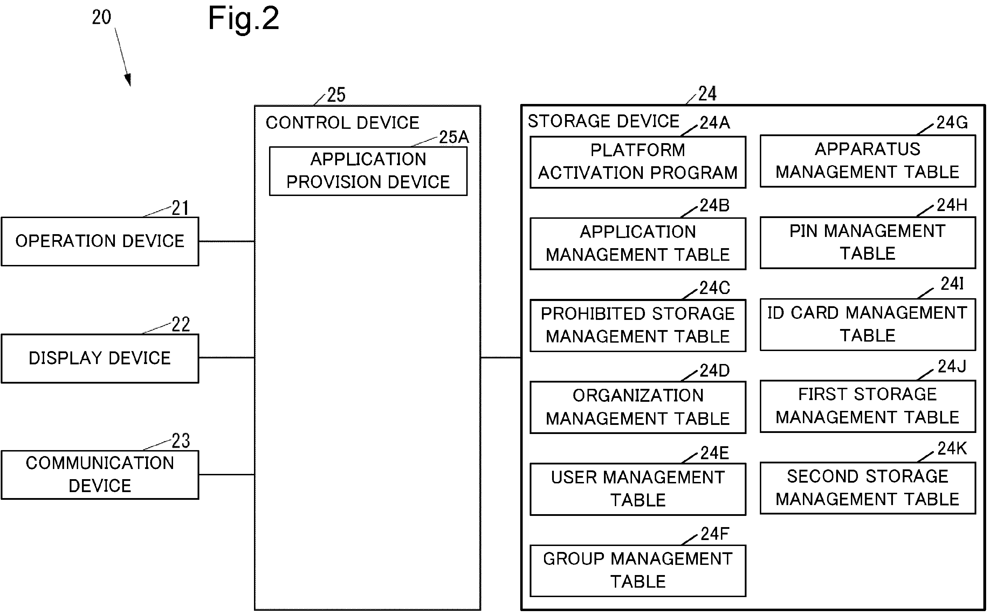

Fig. 2 is a block diagram showing the platform 20 constituted of a single PC. As shown in Fig. 2, the platform 20 includes an operation device 21, a display device 22, a communication device 23, a storage device 24, and a control device 25.

The operation device 21 includes, for example, a keyboard and a mouse for inputting various operations. The display device 22 includes, for example, a liquid crystal display (LCD) for displaying various types of information. The communication device 23 performs communication with an external device, via a network such as a local area network (LAN) or the internet, or directly through wired or wireless communication. The storage device 24 includes a non-volatile memory unit such as a semiconductor memory or a hard disk drive (HDD), for storing various types of information. The control device 25 controls the overall operation of the platform 20.

The storage device 24 can contain a platform operating program 24A, for setting up the platform 20 on the PC. The platform operating program 24A may be, for example, installed in the platform 20 during the manufacturing process thereof, additionally installed in the platform 20 from an external storage medium such as a universal serial bus (USB) memory, or additionally installed in the platform 20 from the network.

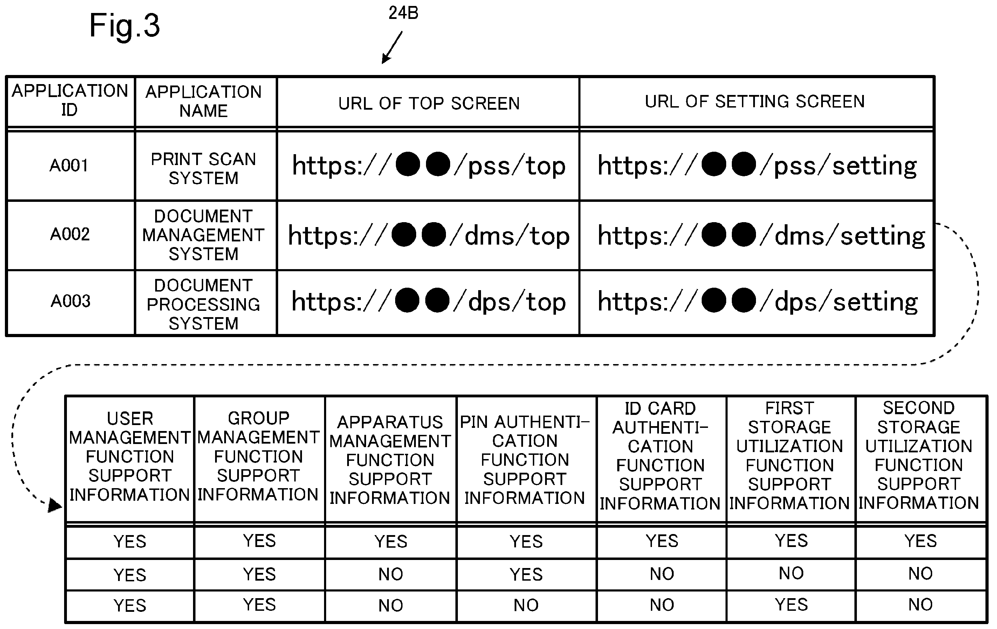

The storage device 24 contains an application management table 24B, for managing the web applications to be executed on the platform 20. Fig. 3 presents an example of the application management table 24B.

As shown in Fig. 3, the application management table 24B indicates, with respect to each of the web applications, an application ID which is the identification information of the web application, the name of the web application, the uniform resource locator (URL) of the top screen of the web application, the URL of the setting screen of the web application, user management function support information, group management function support information, apparatus management function support information, PIN authentication function support information, ID card authentication function support information, first storage utilization function support information, and second storage utilization function support information.

The user management function support information indicates whether the web application is supporting a specific function for specifying various settings with respect to the user (hereinafter, "user management function"). The group management function support information indicates whether the web application is supporting a specific function for specifying various settings with respect to a group to which the user belongs (hereinafter, "group management function"). The apparatus management function support information indicates whether the web application is supporting a specific function for specifying various settings with respect to the image forming apparatus 80 (hereinafter, "apparatus management function").

The PIN authentication function support information indicates whether the web application is supporting a specific function for logging in to the web application from the image forming apparatus 80, using a personal identification number (PIN) code (hereinafter, "PIN authentication function"). The ID card authentication function support information indicates whether the web application is supporting a specific function for logging in to the web application from the image forming apparatus 80, using an integrated circuit (IC) card serving as an identity (ID) card (hereinafter, "ID card authentication function").

The first storage utilization function support information indicates whether the web application is supporting a specific function for utilizing a first storage service, which is a storage service available out of the system 10 (hereinafter, "first storage utilization function"). The second storage utilization function support information indicates whether the web application is supporting a specific function for utilizing a second storage service, which is another storage service available out of the system 10 (hereinafter, "second storage utilization function").

Examples of the storage service include Google Drive, Box (registered trademark), and MS365 (SharePoint (registered trademark)/OneDrive (registered trademark)).

Referring again to Fig. 2, the storage device 24 contains a prohibited storage management table 24C, indicating regions, and the storage services the use of which is prohibited, out of the storage services outside of the system 10, with respect to each of the regions.

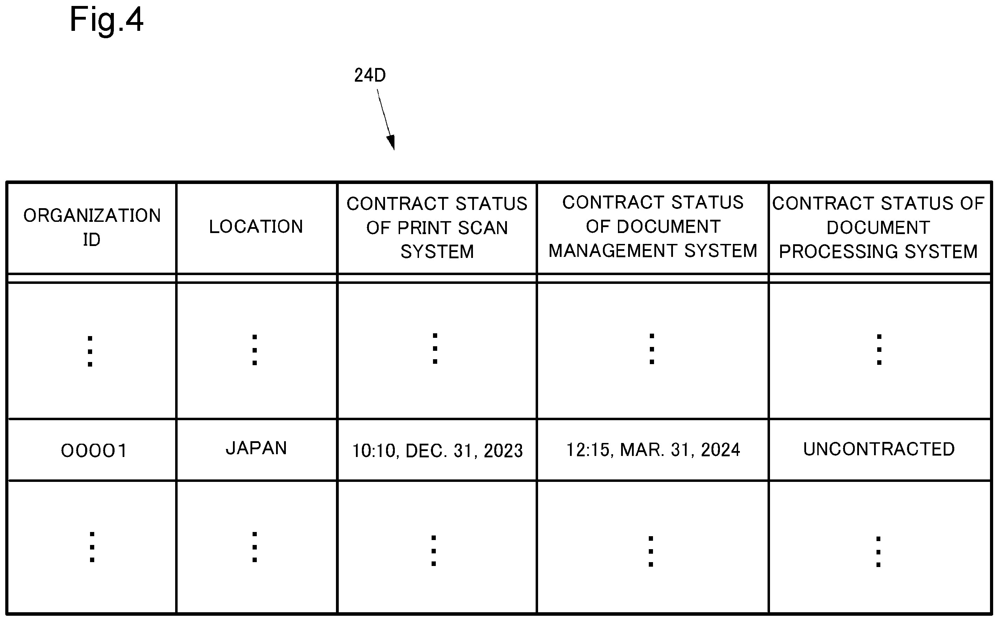

The storage device 24 contains an organization management table 24D, including information for managing an organization that utilizes the platform 20. Fig. 4 presents an example of the organization management table 24D.

As shown in Fig. 4, the organization management table 24D indicates the organization ID which is the identification information of the organization, the location of the organization, contract status with the print scan system 30, contract status with the document management system 40, and contract status with the document processing system 50, with respect to each of the organizations. In Fig. 4, the organization management table 24D only shows a part of specific values.

The organization ID is automatically assigned by the platform 20, when the organization is registered in the platform 20. The location of the organization is inputted by a person authorized to register the organization in the platform 20, for example a distributor or a dealer selling the image forming apparatus 80 to the organization that utilizes the platform 20. Regarding the value indicating the contract status with the web application, the platform 20 inputs the date and time of termination of the contract period with the web application, when the organization is under contract with the web application. When the organization is not under contract with the web application, the platform 20 inputs "Uncontracted". The web application can be utilized through a subscription contract.

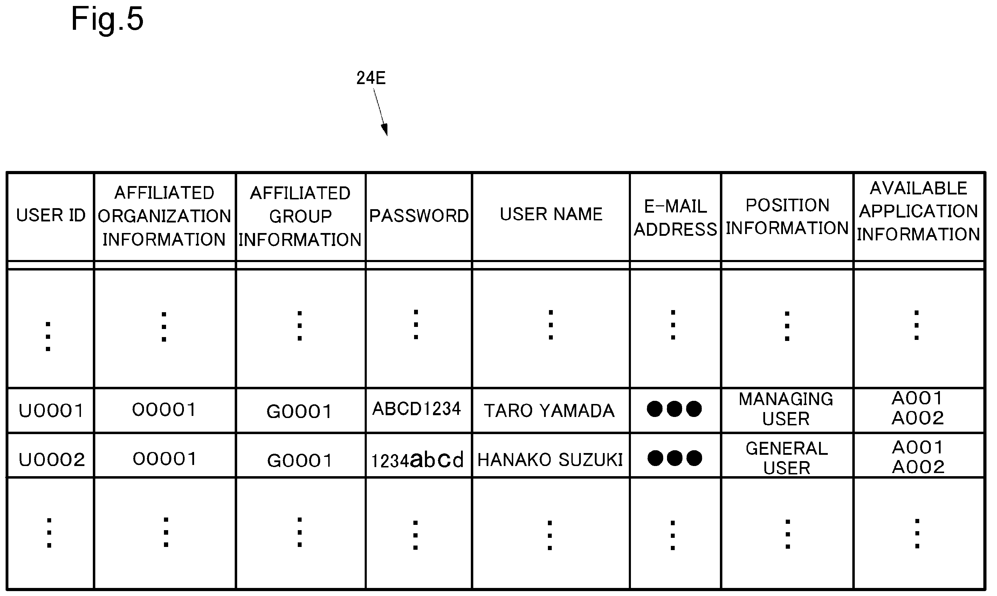

Referring again to Fig. 2, the storage device 24 contains a user management table 24E, for managing the users. Fig. 5 presents an example of the user management table 24E.

As shown in Fig. 5, the user management table 24E indicates the user ID which is the identification information of the user, affiliated organization information, affiliated group information, the password of the user, the user name, the e-mail address of the user, position information, and available application information, with respect to each of the users. In Fig. 5, the user management table 24E only shows a part of specific values.

The user ID is automatically assigned by the platform 20, when the user is registered in the platform 20. The affiliated organization information indicates the organization to which the user belongs, with the organization ID. The affiliated group information indicates the group to which the user belongs, with the group ID which is the identification information of the group. The position information indicates whether the user is a managing user or a general user. The available application information indicates the web application that the user can utilize, with the application ID.

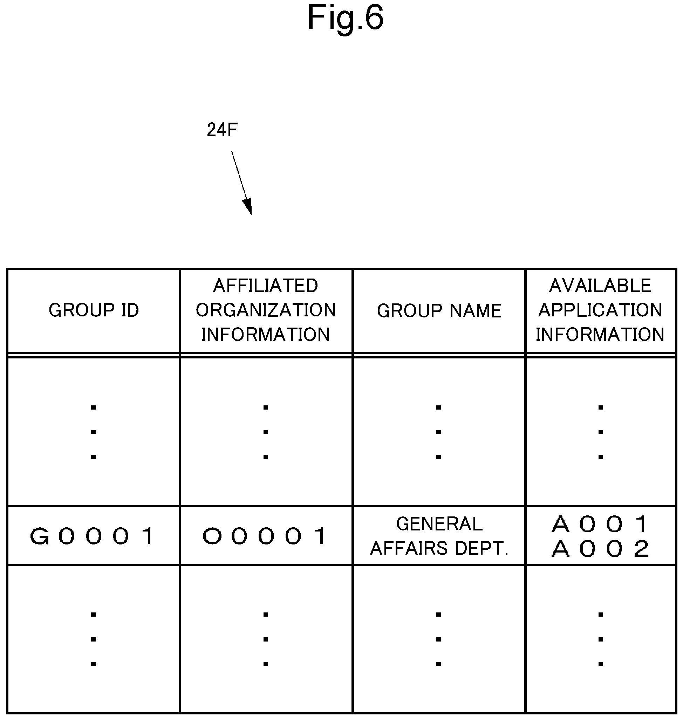

Referring again to Fig. 2, the storage device 24 contains a group management table 24F for managing the groups. Fig. 6 presents an example of the group management table 24F.

As shown in Fig. 6, the group management table 24F indicates the ID of the group, the affiliated organization information, the group name, and the available application information, with respect to each of the groups. In Fig. 6, the group management table 24F only shows a part of specific values.

The group ID is automatically assigned by the platform 20, when the group is registered in the platform 20. The affiliated organization information indicates the organization to which the group belongs, with the organization ID. The available application information indicates the web application that the group can utilize, with the application ID.

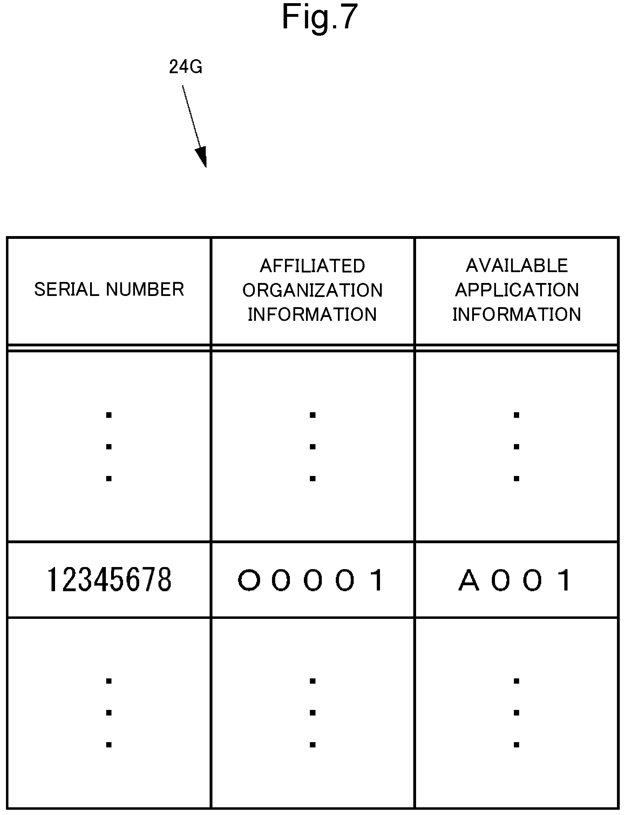

Referring again to Fig. 2, the storage device 24 contains an apparatus management table 24G, for managing the image forming apparatuses 80. Fig. 7 presents an example of the apparatus management table 24G.

As shown in Fig. 7, the apparatus management table 24G indicates the serial number, which is the identification information of the image forming apparatus, the affiliated organization information, and the available application information, with respect to each of the image forming apparatuses 80. In Fig. 7, the apparatus management table 24G only shows a part of specific values. The affiliated organization information indicates the organization to which the image forming apparatus 80 belongs, with the organization ID. The available application information indicates the web application that the image forming apparatus 80 can utilize, with the application ID.

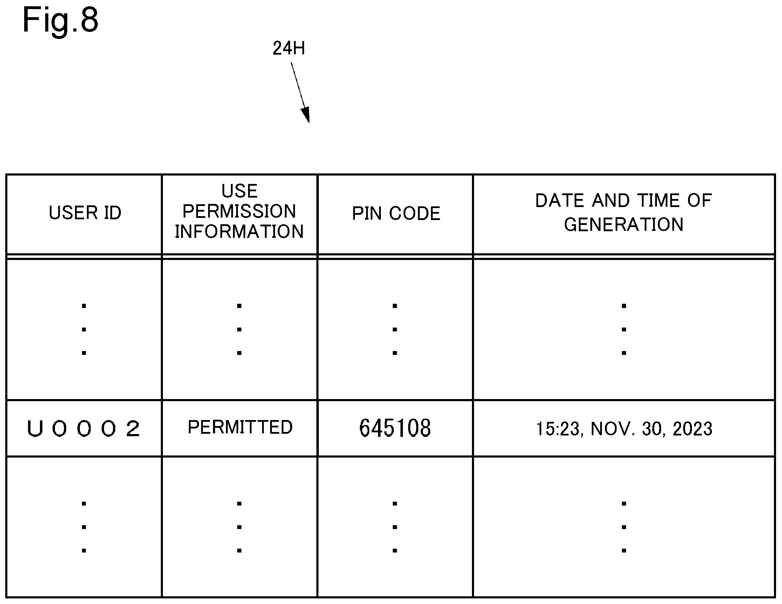

Referring again to Fig. 2, the storage device 24 contains a PIN management table 24H for managing the PIN codes. Fig. 8 presents an example of the PIN management table 24H.

As shown in Fig. 8, the PIN management table 24H indicates the user ID, use permission information indicating whether the user may utilize the PIN authentication function, the PIN code of the user, and the date and time of generation of the PIN code, with respect to each of the users. In Fig. 8, the PIN management table 24H only shows a part of specific values.

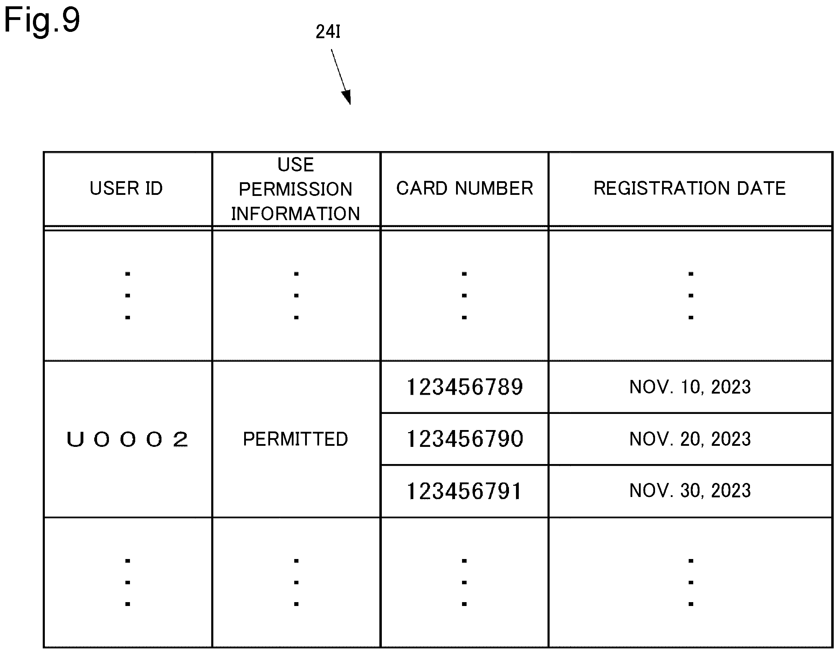

Referring again to Fig. 2, the storage device 24 contains an ID card management table 24I for managing the ID cards. Fig. 9 presents an example of the ID card management table 24I.

As shown in Fig. 9, the ID card management table 24I indicates the user ID, the use permission information indicating whether the user may utilize the ID card authentication function, the card number of the user's ID card, and the date of registration of the ID card, with respect to each of the users. In Fig. 9, the ID card management table 24I only shows a part of specific values. A plurality of ID cards can be registered, for a single user.

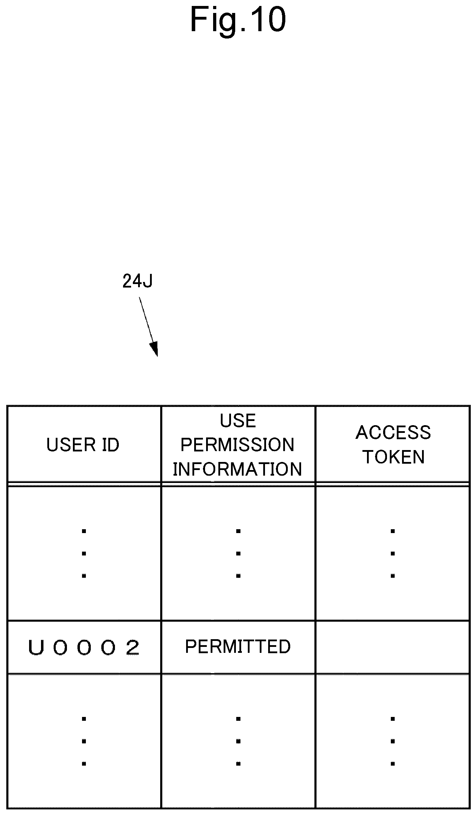

Referring again to Fig. 2, the storage device 24 contains a first storage management table 24J for managing the first storage services, and a second storage management table 24K for managing the second storage services Fig. 10 presents an example of the first storage management table 24J.

As shown in Fig. 10, the first storage management table 24J indicates the user ID, the use permission information indicating whether the user may utilize the first storage service, and an access token for the user to make access to the first storage service, with respect to each of the users. In Fig. 10, the first storage management table 24J only shows a part of specific values.

The content of the second storage management table 24K (see Fig. 2) is similar to that of the first storage management table 24J, and therefore detailed description will be skipped.

Referring again to Fig. 2, the control device 25 includes, for example, a central processing unit (CPU), a read-only memory (ROM) containing programs and various types of data, and a random-access memory (RAM) serving as the operating region for the CPU of the control device 25. The CPU of the control device 25 executes the program stored in the storage device 24 or the ROM of the control device 25.

The control device 25 acts, by executing the platform operating program 24A, as an application provision device 25A that serves as the entrance for the user who has logged in to the platform 20, to utilize the print scan system 30, the document management system 40, and the document processing system 50.

The application provision device 25A generates a webpage to be displayed on a web browser to be subsequently described. In the following description, the display on the web browser is based on the data of the webpage generated by the, application provision device 25A. However, detailed description of the display operation on the web browser will be skipped.

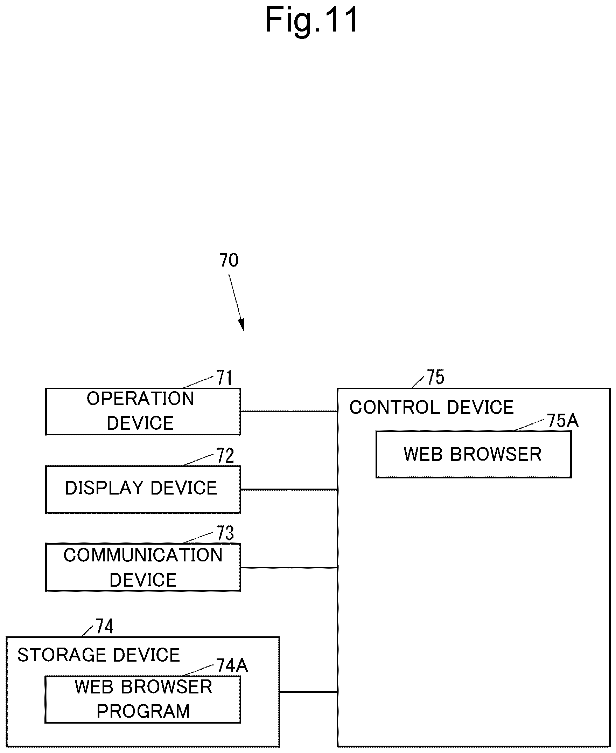

Fig. 11 is a block diagram showing the computer 70, configured as a PC. As shown in Fig. 11, the computer 70 includes an operation device 71, a display device 72, a communication device 73, a storage device 74, and a control device 75.

The operation device 71 includes, for example, a keyboard and a mouse for inputting various operations. The display device 72 includes, for example, an LCD for displaying various types of information. The communication device 73 performs communication with an external device, via a network such as a LAN or the internet, or directly through wired or wireless communication. The storage device 74 includes a non-volatile memory unit such as a semiconductor memory or an HDD, for storing various types of information. The control device 75 controls the overall operation of the computer 70.

The storage device 74 can contain a web browser program 74A. The web browser program 74A may be, for example, installed in the computer 70 during the manufacturing process thereof, additionally installed in the computer 70 from an external storage medium such as a USB memory, or additionally installed in the computer 70 from the network.

The control device 75 includes, for example, a CPU, a ROM containing programs and various types of data, and a RAM serving as the operation region for the CPU of the control device 75. The CPU of the control device 75 executes the program stored in the storage device 74 or the ROM of the control device 75.

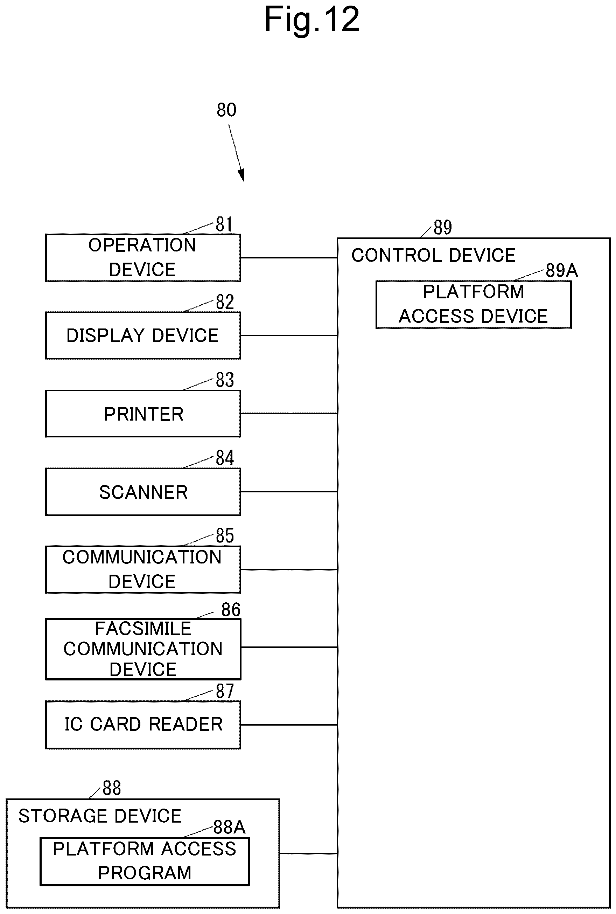

The control device 75 realizes a web browser 75A, by executing the web browser program 74A. Fig. 12 is a block diagram showing the image forming apparatus 80, configured as an MFP.

As shown in Fig. 12, the image forming apparatus 80 is a computer including an operation device 81, a display device 82, a printer 83, a scanner 84, a communication device 85, a facsimile communication device 86, an IC card reader 87, a storage device 88, and a control device 89.

The operation device 81 includes, for example, buttons for inputting various operations. The display device 82 includes, for example, an LCD for displaying various types of information. The printer 83 prints an image on a recording medium such as a paper. The scanner 84 reads an image from a document. The communication device 85 performs communication with an external device, via a network such as a LAN or the internet, or directly through wired or wireless communication.

The facsimile communication device 86 performs facsimile communication with an external facsimile machine, via a communication line such as a public telephone network. The IC card reader 87 reads an IC card. The storage device 88 includes a non-volatile memory unit such as a semiconductor memory or an HDD, for storing various types of information. The control device 75 controls the overall operation of the image forming apparatus 80.

The storage device 88 can contain a platform access program 88A, for making access to the platform 20. The platform access program 88A may be, for example, installed in the image forming apparatus 80 during the manufacturing process thereof, additionally installed in the image forming apparatus 80 from an external storage medium such as a universal serial bus (USB) memory, or additionally installed in the image forming apparatus 80 from the network.

The control device 89 includes, for example, a CPU, a ROM containing programs and various types of data, and a RAM serving as the operation region for the CPU of the control device 89. The CPU of the control device 89 executes the program stored in the storage device 88 or the ROM of the control device 89.

The control device 89 realizes a platform access device 89A, by executing the platform access program 88A.

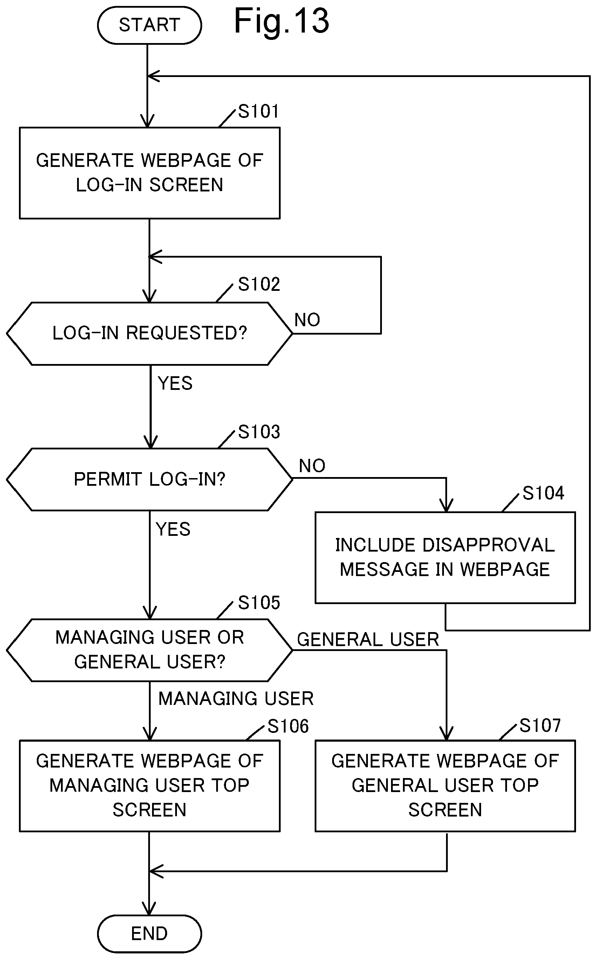

Hereunder, an operation of the platform 20, performed when the user logs in, will be described. Fig. 13 is a flowchart showing the operation of the platform 20, performed when the user logs in.

When the user makes access to the platform 20, through the web browser 75A of the computer 70, the application provision device 25A of the platform 20 executes the operation shown in Fig. 13.

As shown in Fig. 13, the application provision device 25A generates the webpage showing a log-in screen, through which the user logs in to the platform 20 (step S101). The user inputs the user ID and the password to the log-in screen displayed on the web browser 75A, thereby requesting the log-in to the platform 20, through the log-in screen.

After step S101, the application provision device 25Arepeatedly decides that the log-in request to the platform 20 has not been inputted, until detecting the input of the log-in request to the platform 20 (NO at step S102).

Upon deciding that the log-in request to the platform 20 has been inputted (YES at step S102), the application provision device 25A decides whether the log-in by the user may be permitted, on the basis of the combination of the user ID and the password inputted to the log-in screen, and the combination of the user ID and the password listed in the user management table 24E (step S103).

Upon deciding that the log-in by the user should not be permitted (NO at step S103), the application provision device 25A performs the operation of step S101, including a message to the effect that the log-in by the user is not permitted, in the webpage (step S104).

Upon deciding that the log-in by the user may be permitted (YES at step S103), the application provision device 25A decides whether the user permitted to log in (hereinafter, "log-in user") is a managing user or a general user, on the basis of the position information in the user management table 24E (step S105).

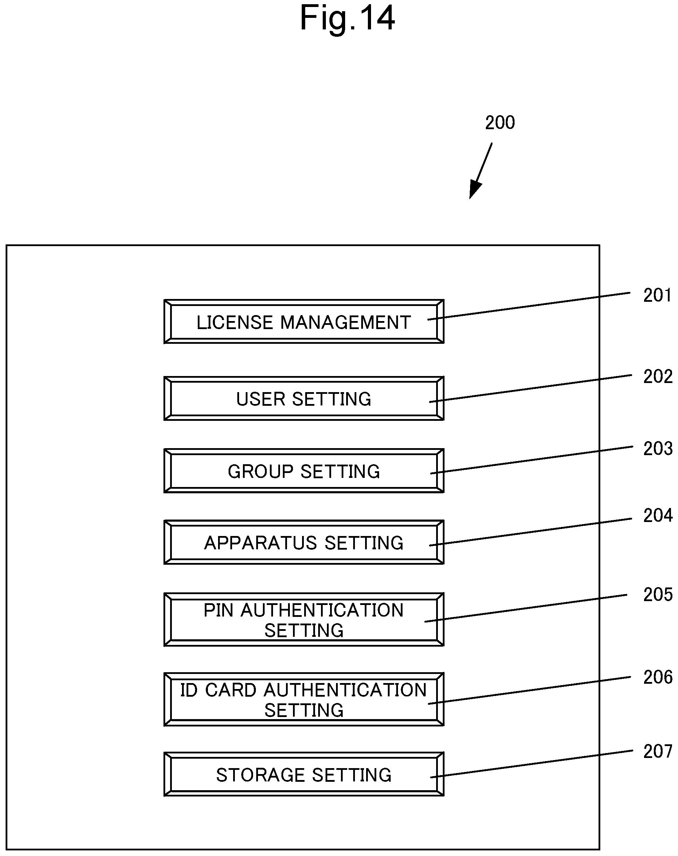

Upon deciding that the log-in user is a managing user ("Managing User" at step S105), the application provision device 25A generates a webpage showing a managing user top screen 200 shown in Fig. 14 (step S106), and finishes the operation shown in Fig. 13. Fig. 14 presents an example of the managing user top screen 200.

As shown in Fig. 14, the managing user top screen 200 includes a license management button 201, a user setting button 202, a group setting button 203, an apparatus setting button 204, a PIN authentication setting button 205, an ID card authentication setting button 206, and a storage setting button 207.

The license management button 201 is a soft key for managing the license of the web application. The user setting button 202 is a soft key for specifying the settings related to the user belonging to the organization to which the log-in user belongs. The group setting button 203 is a soft key for specifying the settings related to the group belonging to the organization to which the log-in user belongs.

The apparatus setting button 204 is a soft key for specifying the settings related to the image forming apparatus belonging to the organization to which the log-in user belongs. The PIN authentication setting button 205 is a soft key for specifying the settings related to the PIN authentication function. The ID card authentication setting button 206 is a soft key for specifying the settings related to the ID card authentication function. The storage setting button 207 is a soft key for specifying the settings related to a storage service outside of the system 10.

When the license management button 201 is pressed, the application provision device 25A includes a license management region for managing the license of the web application, in the webpage. In the license management region, the subscription contract with the web application can be established or cancelled by the organization to which the log-in user belongs.

When the subscription contract with the web application is established in the license management region, the application provision device 25A registers the date and time of termination of the contract period, as the contract status of the web application under contract, in the organization management table 24D, in association with the organization to which the log-in user belongs.

When the subscription contract with the web application is cancelled in the license management region, the application provision device 25A registers "Uncontracted" as the contract status of the web application cancelled, in the organization management table 24D, in association with the organization to which the log-in user belongs.

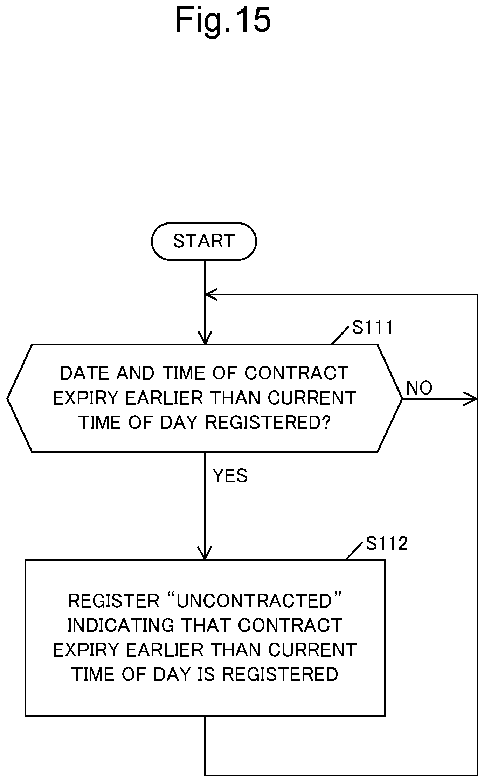

Fig. 15 is a flowchart showing an operation of the platform 20, performed when the contract period of the subscription contract expires.

As shown in Fig. 15, the application provision device 25A repeatedly decides that the date and time of termination of the contract period, earlier than the current time of day, is not registered as the contract status of the web application, in the organization management table 24D, until deciding that the date and time of termination of the contract period earlier than the current time of day is registered (NO at step S111).

Upon deciding that the date and time of termination of the contract period earlier than the current time of day is registered (YES at step S111), the application provision device 25A overwrites "Uncontracted" as the contract status in the organization management table 24D, with respect to the contract about which the date and time of termination of the contract period earlier than the current time of day is registered (step S112), and executes the operation of step S111.

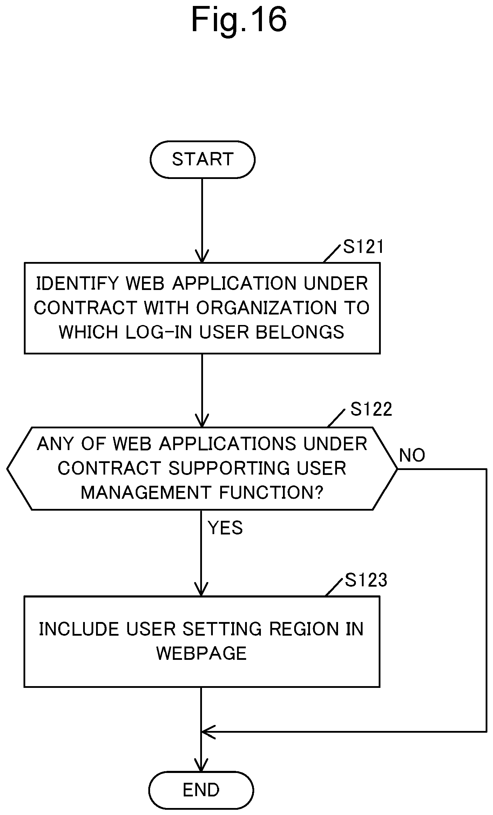

Fig. 16 is a flowchart showing an operation of the platform 20, performed when the user setting button 202 (see Fig. 14) is pressed.

As shown in Fig. 16, when the user setting button 202 is pressed, the application provision device 25Aidentifies the organization ID associated with the user ID of the log-in user, in the affiliated organization information in the user management table 24E, and identifies the web application under contract with the organization to which the log-in user belongs, on the basis of the contract status of the web application associated with the organization ID identified in the organization management table 24D (step S121).

The application provision device 25A decides whether any of the web applications identified at step S121, under contract with the organization to which the log-in user belongs, is supporting the user management function, on the basis of the user management function support information, in the application management table 24B (step S122).

Upon deciding that one or more of the web applications, under contract with the organization to which the log-in user belongs, are supporting the user management function (YES at step S 122), the application provision device 25A includes a user setting region, for specifying the settings related to the user management function, in other words various settings related to the user, in the webpage (step S123).

Upon deciding that none of the web applications under contract are supporting the user management function (NO at step S 122), or finishing the operation of step S123, the application provision device 25A finishes the operation shown in Fig. 16.

In the user setting region, it is possible to add a user to the organization to which the log-in user belongs, specify various types of information of the user belonging to the organization to which the log-in user belongs, or delete a user from the organization to which the log-in user belongs. When a user is added in the user setting region, the application provision device 25A automatically assigns the user ID to the added user.

The managing user can specify, with respect to the users of the organization to which the managing user belongs, the password, the user name, the e-mail address, the position information, and the available web application, in the user setting region. When any of the password, the user name, the e-mail address, the position information, and the web application available to the corresponding user, is specified in the user setting region, the application provision device 25A enters the specified information, in the user management table 24E.

When the group setting button 203 (see Fig. 14) is pressed, the application provision device 25A performs the operation similar to that shown in Fig. 16. However, the application provision device 25A decides whether any of the web applications under contract with the organization to which the log-in user belongs, is supporting the group management function, on the basis of the group management function support information, in the application management table 24B.

Upon deciding that one or more of the web applications under contract are supporting the group management function, the application provision device 25Aincludes a group setting region, for specifying the settings related to the group management function, in other words various settings related to the group, in the webpage. In contrast, upon deciding that none of the web applications under contract are supporting the group management function, the application provision device 25A does not include the group setting region, in the webpage.

In the group setting region, it is possible to add a group to the organization to which the log-in user belongs, specify various types of information of the group belonging to the organization to which the log-in user belongs, or delete a group from the organization to which the log-in user belongs. When a group is added in the group setting region, the application provision device 25A automatically assigns the group ID to the added group.

The managing user can specify, with respect to the groups of the organization to which the managing user belongs, the group name, the user belonging to the group, and the available web application, in the group setting region. When the group name and the available web application are specified in the group setting region, the application provision device 25A enters the specified information in the group management table 24F. When the user belonging to the group is specified in the group setting region, the application provision device 25A enters the specified information, in the user management table 24E.

When the apparatus setting button 204 (see Fig. 14) is pressed, the application provision device 25A performs the operation similar to that shown in Fig. 16. However, the application provision device 25A decides whether any of the web applications under contract with the organization to which the log-in user belongs, is supporting the apparatus management function, on the basis of the apparatus management function support information, in the application management table 24B.

Upon deciding that one or more of the web applications under contract are supporting the apparatus management function, the application provision device 25A includes an apparatus setting region, for specifying the settings related to the apparatus management function, in other words various settings related to the image forming apparatus 80, in the webpage. In contrast, upon deciding that none of the web applications under contract are supporting the apparatus management function, the application provision device 25A does not include the apparatus setting region, in the webpage.

In the apparatus setting region, it is possible to add an image forming apparatus 80 to the organization to which the log-in user belongs, specify various types of information of the image forming apparatus 80 belonging to the organization to which the log-in user belongs, or delete an image forming apparatus 80 from the organization to which the log-in user belongs.

The managing user can specify, with respect to the organization to which the managing user belongs, the serial number of the image forming apparatus 80, and the available web application, in the apparatus setting region. When the serial number of the image forming apparatus 80 and the available web application are specified in the apparatus setting region, the application provision device 25A enters the specified information, in the apparatus management table 24G.

Here, the serial number of the image forming apparatus 80, to be registered in the apparatus management table 24G, may be registered therein from the image forming apparatus 80 itself, through the platform access device 89A.

When the PIN authentication setting button 205 (see Fig. 14) is pressed, the application provision device 25A performs the operation similar to that shown in Fig. 16. However, the application provision device 25A decides whether any of the web applications under contract with the organization to which the log-in user belongs, is supporting the PIN authentication function, on the basis of the PIN authentication function support information, in the application management table 24B.

Upon deciding that one or more of the web applications under contract are supporting the PIN authentication function, the application provision device 25A includes a PIN authentication setting region, for specifying the settings related to the PIN authentication function, in other words the settings for permitting the use of the PIN authentication function with respect to each of the users, in the webpage. In contrast, upon deciding that none of the web applications under contract are supporting the PIN authentication function, the application provision device 25A does not include the PIN authentication setting region, in the webpage.

In the PIN authentication setting region, it is possible to permit the use of the PIN authentication function, or prohibit the use of the PIN authentication function. When whether to permit the use of the PIN authentication function is decided in the PIN authentication setting region, the application provision device 25A enters the use permission information according to that decision, in the PIN management table 24H.

When the ID card authentication setting button 206 (see Fig. 14) is pressed, the application provision device 25A performs the operation similar to that shown in Fig. 16. However, the application provision device 25A decides whether any of the web applications under contract with the organization to which the log-in user belongs, is supporting the ID card authentication function, on the basis of the ID card authentication function support information, in the application management table 24B.

Upon deciding that one or more of the web applications under contract are supporting the ID card authentication function, the application provision device 25A includes an ID card authentication setting region, for specifying the settings related to the ID card authentication function, in other words the settings for permitting the use of the ID card authentication function with respect to each of the users, in the webpage. In contrast, upon deciding that none of the web applications under contract are supporting the ID card authentication function, the application provision device 25A does not include the ID card authentication setting region, in the webpage.

In the ID card authentication setting region, it is possible to permit the use of the ID card authentication function, or prohibit the use of the ID card authentication function. When whether to permit the use of the ID card authentication function is decided in the ID card authentication setting region, the application provision device 25A enters the use permission information according to that decision, in the ID card management table 24I.

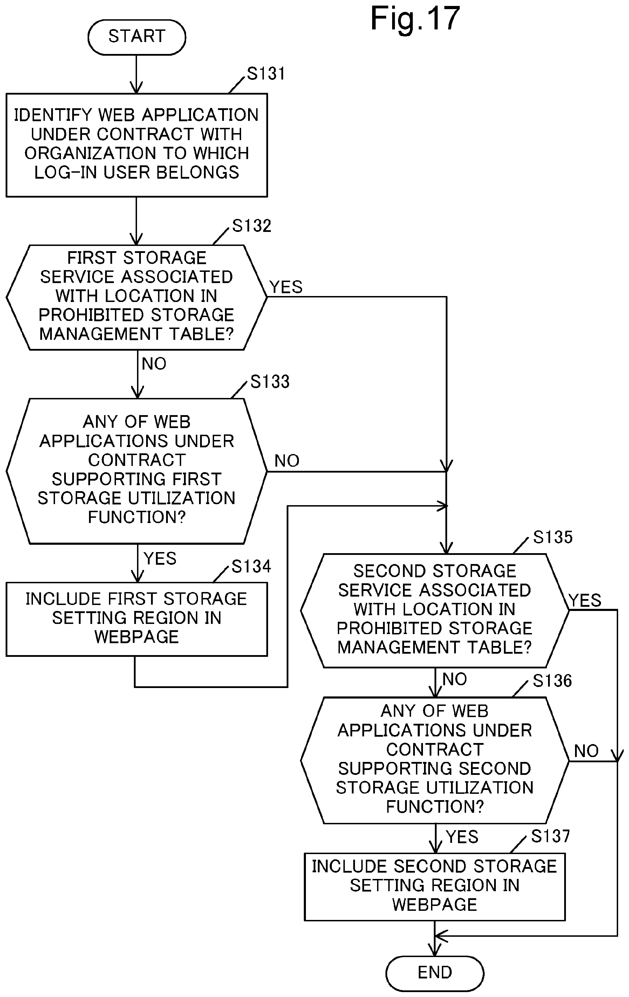

Fig. 17 is a flowchart showing an operation of the platform 20, performed when the storage setting button 207 (see Fig. 14) is pressed.

As shown in Fig. 17, when the storage setting button 207 is pressed, the application provision device 25A identifies the organization ID associated with the user ID of the log-in user, in the affiliated organization information in the user management table 24E, and identifies the web application under contract with the organization to which the log-in user belongs, on the basis of the contract status of the web application associated with the organization ID identified in the organization management table 24D (step S131).

The application provision device 25A identifies the location associated with the organization ID, identified at step S131 in the organization management table 24D, and decides whether the first storage service is associated with the location identified in the prohibited storage management table 24C (step S132).

Upon deciding that the first storage service is not associated with the location identified in the prohibited storage management table 24C (No at step S132), the application provision device 25A decides whether any of the web applications under contract, identified at step S131, are supporting the first storage utilization function, on the basis of the first storage utilization function support information, in the application management table 24B (step S133).

Upon deciding that one or more of the web applications under contract are supporting the first storage utilization function (YES at step S133), the application provision device 25A includes a first storage setting region, for specifying the settings related to the first storage utilization function, in other words the settings for permitting the use of the first storage service, in the webpage (step S134).

Upon deciding that the first storage service is associated with the location identified in the prohibited storage management table 24C (YES at step S132), deciding that none of the web applications under contract are supporting the first storage utilization function (NO at step S133), or finishing the operation of step S134, the application provision device 25A decides whether the second storage service is associated with the location identified in the prohibited storage management table 24C (step S135).

Upon deciding that the second storage service is not associated with the location identified in the prohibited storage management table 24C (NO at step S135), the application provision device 25A decides whether any of the web applications under contract, identified at step S131, are supporting the second storage utilization function, on the basis of the second storage utilization function support information in the application management table 24B (step S136).

Upon deciding that one or more of the web applications under contract are supporting the second storage utilization function (YES at step S136), the application provision device 25A includes a second storage setting region, for specifying the settings related to the second storage utilization function, in other words the settings for permitting the use of the second storage service, in the webpage (step S137).

Upon deciding that the second storage service is associated with the location identified in the prohibited storage management table 24C (YES at step S135), deciding that none of the web applications under contract are supporting the second storage utilization function (NO at step S136), or finishing the operation of step S137, the application provision device 25A finishes the operation shown in Fig. 17.

In the first storage setting region, it is possible to permit the use of the first storage service, or prohibit the use of the first storage service. When whether to permit the use of the first storage service is decided in the first storage setting region, the application provision device 25A enters the use permission information according to that decision, in the first storage management table 24J.

Likewise, in the second storage setting region, it is possible to permit the use of the second storage service, or prohibit the use of the second storage service. When whether to permit the use of the second storage service is decided in the second storage setting region, the application provision device 25A enters the use permission information according to that decision, in the second storage management table 24K.

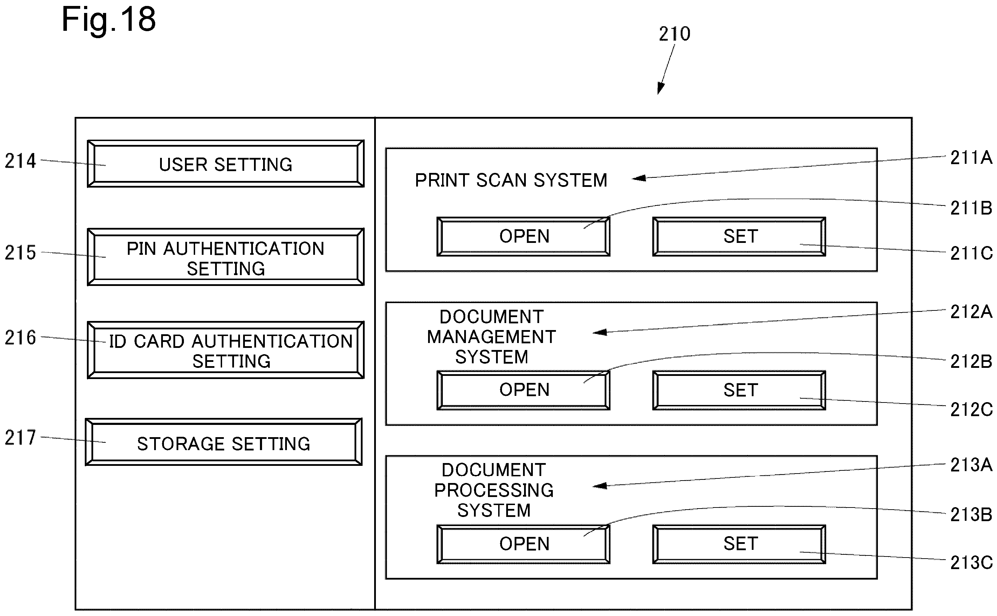

Referring again to Fig. 13, upon deciding that the log-in user is a general user ("General User" at step S105), the application provision device 25A generates a webpage showing a managing user top screen 210 shown in Fig. 18 (step S107), and finishes the operation shown in Fig. 13. Fig. 18 presents an example of the general user top screen 210.

As shown in Fig. 18, the general user top screen 210 includes application name display fields 211A, 212A, and 213A, top screen access buttons 211B, 212B, and 213B, and setting screen access buttons 211C, 212C, and 213C.

The application name display field 211A indicates the application name of the print scan system 30. The top screen access button 211B is a soft key for making access to the URL of the top screen of the print scan system 30. The setting screen access button 211C is a soft key for making access to the URL of the setting screen of the print scan system 30.

The application name display field 212A indicates the application name of the document management system 40. The top screen access button 212B is a soft key for making access to the URL of the top screen of the document management system 40. The setting screen access button 212C is a soft key for making access to the URL of the setting screen of the document management system 40.

The application name display field 213A indicates the application name of the document processing system 50. The top screen access button 213B is a soft key for making access to the URL of the top screen of the document processing system 50. The setting screen access button 213C is a soft key for making access to the URL of the setting screen of the document processing system 50.

The application provision device 25A identifies the organization ID associated with the user ID of the log-in user, in the affiliated organization information in the user management table 24E, identifies the web application under contract with the organization to which the log-in user belongs, on the basis of the contract status of the web application associated with the organization ID identified in the organization management table 24D, and identifies the application name of the identified web application, the URL of the top screen, and the URL of the setting screen, on the basis of the application management table 24B.

The general user top screen 210 includes the application name display fields 211A, 212A, and 213A, the top screen access buttons 211B, 212B, and 213B, and the setting screen access buttons 211C, 212C, and 213C, respectively corresponding to the print scan system 30, the document management system 40, and the document processing system 50. It is not mandatory for the general user top screen 210 to include the application name display field, the top screen access button, and the setting screen access button corresponding to the web application with which the organization to which the log-in user belongs is not under contract.

The general user can open the top screen or the setting screen of the web application with which the contract has been established, from the general user top screen 210. In other words, the general user can utilize each of the print scan system 30, the document management system 40, and the document processing system 50, by logging in to the platform 20, without the need to individually log in to each of the print scan system 30, the document management system 40, and the document processing system 50.

The general user top screen 210 also includes a user setting button 214, a PIN authentication setting button 215, an ID card authentication setting button 216, and a storage setting button 217.

The user setting button 214 is a soft key for specifying the setting related to the log-in user. The PIN authentication setting button 215 is a soft key for specifying the settings of the PIN authentication function, with respect to the log-in user. The ID card authentication setting button 216 is a soft key for specifying the settings of the ID card authentication function, with respect to the log-in user. The storage setting button 217 is a soft key for specifying the settings of the storage service with respect to the log-in user.

When the user setting button 214 is pressed, the application provision device 25A performs the operation similar to that shown in Fig. 16. However, upon deciding that one or more of the web applications, under contract with the organization to which the log-in user belongs, are supporting the user management function, the application provision device 25A includes a log-in user setting region, for specifying the settings related to the user management function, in other words various settings related to the log-in user, in the webpage. In contrast, upon deciding that none of the web applications under contract are supporting the user management function, the application provision device 25A does not include the log-in user setting region, in the webpage.

In the log-in user setting region, it is possible to specify various types of information related to the log-in user. The log-in user can specify the password, the user name, and the e-mail address of the log-in user, in the log-in user setting region. When one or more of the password, user name, and the e-mail address of the log-in user are specified in the log-in user setting region, the application provision device 25A enters such information in the user management table 24E.

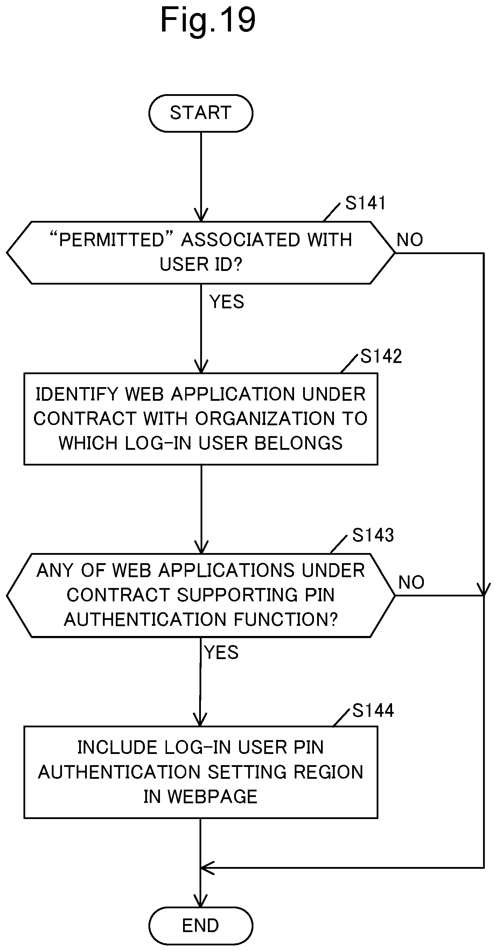

Fig. 19 is a flowchart showing an operation of the platform 20, performed when the PIN authentication setting button 215 (see Fig. 18) is pressed.

As shown in Fig. 19, when the PIN authentication setting button 215 is pressed, the application provision device 25A decides whether "Permitted" is associated with the user ID of the log-in user, in the use permission information in the PIN management table 24H (step S141).

Upon deciding that "Permitted" is associated with the user ID of the log-in user, (YES at step S141), the application provision device 25A identifies the organization ID associated with the user ID of the log-in user, in the affiliated organization information in the user management table 24E, and identifies the web application under contract with the organization to which the log-in user belongs, on the basis of the contract status of the web application associated with the organization ID identified in the organization management table 24D (step S142).

The application provision device 25A decides whether any of the web applications under contract, identified at step S142, are supporting the PIN authentication function, on the basis of the PIN authentication function support information, in the application management table 24B (step S143).

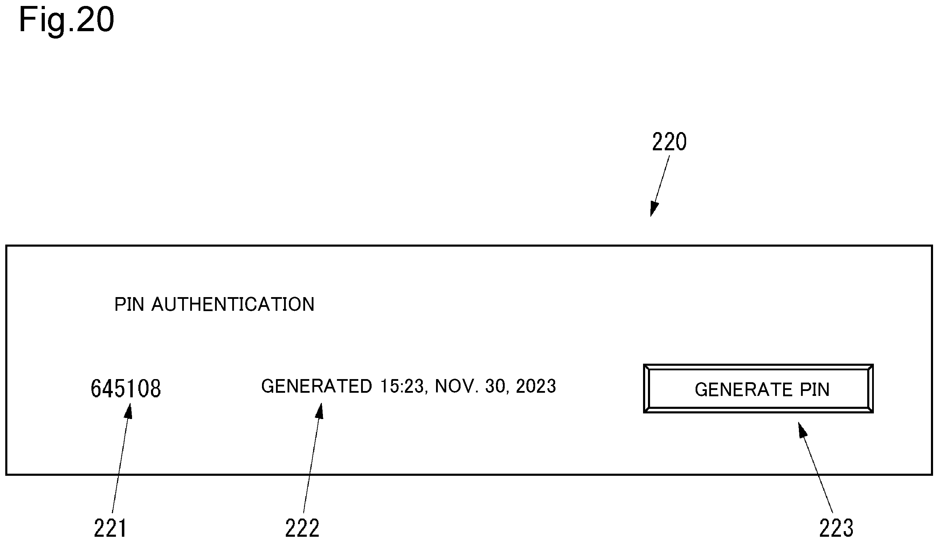

Upon deciding that one or more of the web applications under contract are supporting the PIN authentication function (YES at step S143), the application provision device 25A includes a log-in user PIN authentication setting region 220 (see Fig. 20), for specifying the settings related to the PIN authentication function with respect to the log-in user, in the webpage (step S144).

Upon deciding that "Permitted" is not associated with the user ID of the log-in user (NO at step S141), deciding that none of the web applications under contract are supporting the PIN authentication function (NO at step S143), or finishing the operation of step S144, the application provision device 25A finishes the operation shown in Fig. 19.

Fig. 20 presents an example of the log-in user PIN authentication setting region 220.

As shown in Fig. 20, in the log-in user PIN authentication setting region 220, it is possible to generate the PIN code of the log-in user, according to the instruction of the log-in user. The log-in user PIN authentication setting region 220 includes a PIN code display field 221, a generation date and time display field 222, and a PIN code generation button 223.

The PIN code display field 221 indicates the PIN code of the log-in user, registered in the PIN management table 24H. The generation date and time display field 222 indicates the date and time of generation of the PIN code of the log-in user, registered in the PIN management table 24H. The PIN code generation button 223 is a soft key for generating a new PIN code.

When the PIN code of the log-in user is generated in the log-in user PIN authentication setting region, the application provision device 25A enters the generated PIN code and the date and time of generation of the PIN code, in the PIN management table 24H.

When the ID card authentication setting button 216 (see Fig. 18) is pressed, the application provision device 25A performs the operation similar to that shown in Fig. 19. However, the application provision device 25A decides whether "Permitted" is associated with the user ID of the log-in user, in the use permission information in the ID card management table 24I.

The application provision device 25A also decides whether any of the web applications under contract with the organization to which the log-in user belongs are supporting the ID card authentication function, on the basis of the ID card authentication function support information in the application management table 24B.

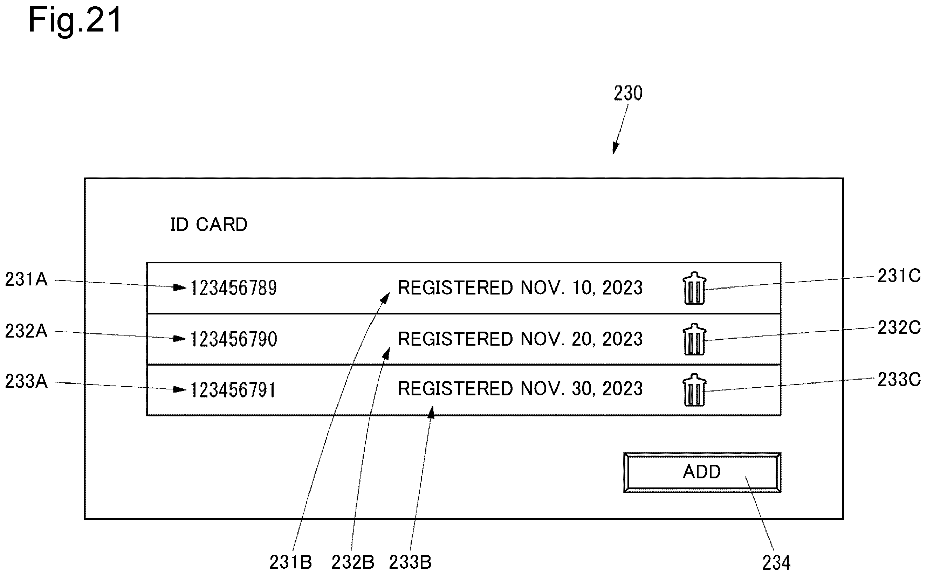

Upon deciding that one or more of the web applications under contract are supporting the ID card authentication function, the application provision device 25A includes a log-in user ID card authentication setting region 230 (see Fig. 21), for specifying the settings related to the ID card authentication function with respect to the log-in user, in the webpage. In contrast, upon deciding that none of the web applications under contract are supporting the ID card authentication function, the application provision device 25A does not include the log-in user ID card authentication setting region 230, in the webpage.

Fig. 21 presents an example of the log-in user ID card authentication setting region 230.

As shown in Fig. 21, in the log-in user ID card authentication setting region 230, it is possible to register the card number of the ID card of the log-in user, or cancel the registration, according to the instruction of the log-in user. The log-in user ID card authentication setting region 230 includes card number display fields 231A, 232A, and 233A, registration date display fields 231B, 232B, and 233B, card number deletion boxes 231C, 232C, and 233C, and card number addition button 234.

The card number display fields 231A, 232A, and 233A each indicate the card number of the log-in user, registered in the ID card management table 24I. The registration date display fields 231B, 232B, and 233B each indicate the date of registration of the card number of the log-in user, registered in the ID card management table 24I. The card number deletion boxes 231C, 232C, 233C are icons for deleting the card number of the log-in user, registered in the ID card management table 24I. The card number addition button 234 is a soft key for adding a new card number.

When the card number of the ID card of the log-in user is registered in the log-in user ID card authentication setting region, the application provision device 25A enters the registered card number and the date of generation of the card number, in the ID card management table 24I.

Here, the card number to be registered in the ID card management table 24I may be read from the actual ID card, by an IC card reader provided on the image forming apparatus 80, and registered from the image forming apparatus 80 itself, along with the registration date, through the platform access device 89A.

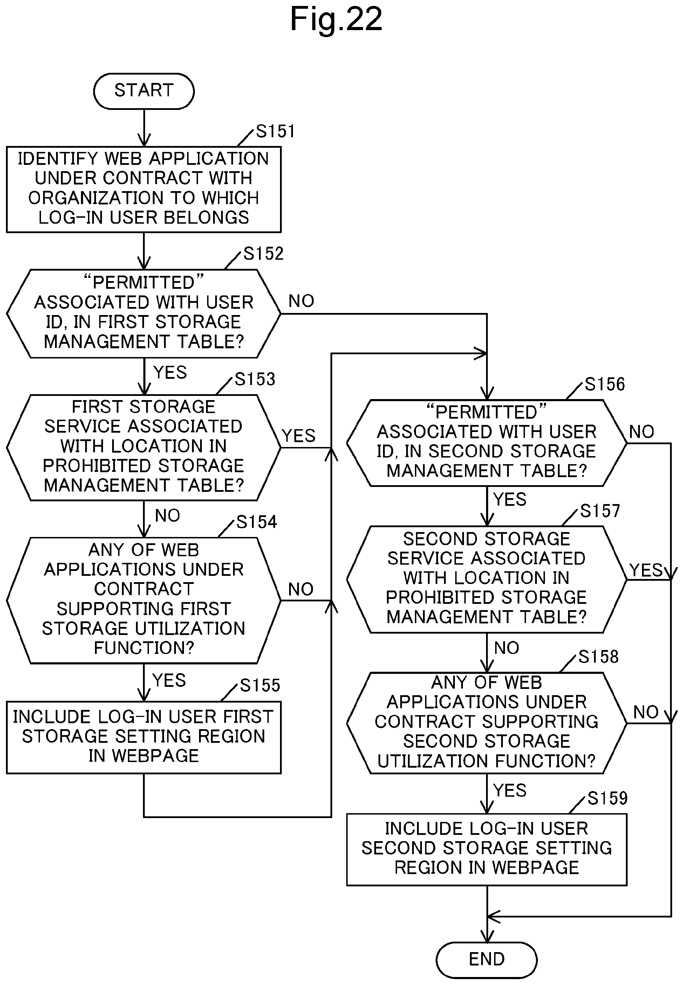

Fig. 22 is a flowchart showing an operation of the platform 20, performed when the storage setting button 217 (see Fig. 18) is pressed.

As shown in Fig. 22, when the storage setting button 217 is pressed, the application provision device 25A identifies the organization ID associated with the user ID of the log-in user, in the affiliated organization information in the user management table 24E, and identifies the web application under contract with the organization to which the log-in user belongs, on the basis of the contract status of the web application associated with the organization ID identified in the organization management table 24D (step S151).

After step S151, the application provision device 25A decides whether "Permitted" is associated with the user ID of the log-in user, in the use permission information in the first storage management table 24J (step S152).

Upon deciding that "Permitted" is associated with the user ID of the log-in user (YES at step S152), the application provision device 25A identifies the location associated with the organization ID, identified in the organization management table 24D, and decides whether the first storage service is associated with the location identified in the prohibited storage management table 24C (step S153).

Upon deciding that the first storage service is not associated with the identified location (No at step S153), the application provision device 25A decides whether any of the web applications under contract, identified at step S151, are supporting the first storage utilization function, on the basis of the first storage utilization function support information, in the application management table 24B (step S154).

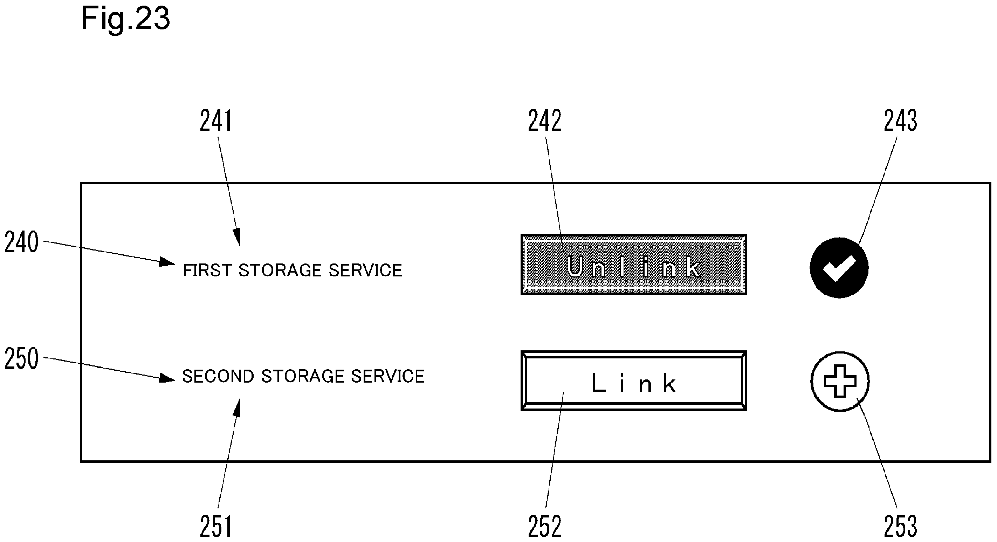

Upon deciding that one or more of the web applications under contract are supporting the first storage utilization function (YES at step S154), the application provision device 25A includes a log-in user first storage setting region 240 (see Fig. 23), for specifying the settings related to the first storage utilization function, in other words the settings related to the first storage service with respect to the log-in user, in the webpage (step S155).

Upon deciding that "Permitted" is not associated with the user ID of the log-in user (NO at step S152), in the use permission information in the first storage management table 24J, deciding that the first storage service is associated with the identified location (Yes at step S153), deciding that none of the web applications under contract are supporting the first storage utilization function (NO at step S154), or finishing the operation of step S155, the application provision device 25A decides whether "Permitted" is associated with the user ID of the log-in user, in the use permission information in the second storage management table 24K (step S156).

Upon deciding that "Permitted" is associated with the user ID of the log-in user (YES at step S156), the application provision device 25A decides whether the second storage service is associated with the location identified in the prohibited storage management table 24C (step S157).

Upon deciding that the second storage service is not associated with the identified location (NO at step S157), the application provision device 25A decides whether any of the web applications under contract, identified at step S151, are supporting the second storage utilization function, on the basis of the second storage utilization function support information in the application management table 24B (step S158).

Upon deciding that one or more of the web applications under contract are supporting the second storage utilization function (YES at step S158), the application provision device 25A includes a log-in user second storage setting region 250 (see Fig. 23), for specifying the settings related to the second storage utilization function, in other words the settings related to the second storage service with respect to the log-in user, in the webpage (step S159).

Upon deciding that "Permitted" is not associated with the user ID of the log-in user (NO at step S156), in the use permission information in the second storage management table 24K, deciding that the second storage service is associated with the identified location (Yes at step S157), deciding that none of the web applications under contract are supporting the second storage utilization function (NO at step S158), or finishing the operation of step S159, the application provision device 25A finishes the operation shown in Fig. 22.

Fig. 23 presents an example of the log-in user first storage setting region 240 and the log-in user second storage setting region 250.

As shown in Fig. 23, in the log-in user first storage setting region 240, it is possible to register an access token for the log-in user for making access to the first storage service, or cancel the registration, according to the instruction of the log-in user. Likewise, in the log-in user second storage setting region 250, it is possible to register an access token for the log-in user for making access to the second storage service, or cancel the registration, according to the instruction of the log-in user.

The log-in user first storage setting region 240 includes a storage name display field 241, a connection status button 242, and a connection status display field 243. The storage name display field 241 indicates the name of the first storage service. The connection status button 242 is a soft key for establishing the connection to the first storage service, or cancelling the connection. The connection status display field 243 indicates the connection status with the first storage service.

Likewise, the log-in user second storage setting region 250 includes a storage name display field 251, a connection status button 252, and a connection status display field 253. The storage name display field 251 indicates the name of the second storage service. The connection status button 252 is a soft key for establishing the connection to the second storage service, or cancelling the connection. The connection status display field 253 indicates the connection status with the second storage service.

The connection status buttons 242, 252 and the connection status display fields 243, 253 present different appearances, depending on whether the connection to the storage service is established or disconnected. When the connection to the storage service is established, the connection status buttons 242, 252 and the connection status display fields 243, 253 each present the appearance as represented by the connection status button 242 and the connection status display field 243 shown in Fig. 23. When the connection to the storage service is disconnected, the connection status buttons 242, 252 and the connection status display fields 243, 253 each present the appearance as represented by the connection status button 252 and the connection status display field 253 shown in Fig. 23.

When the connection status button 242 is pressed, without the connection to the first storage service being established, the application provision device 25A makes access to the first storage service, to display the log-in screen to the first storage service, on the web browser 75A. Accordingly, the log-in user of the platform 20 can log in to the first storage service, by inputting account information that allows the log-in user of the platform 20 to make connection to the first storage service, to the log-in screen of the first storage service.

Upon acquiring an access token from the first storage service, because of the log-in user of the platform 20 having logged in to the first storage service, the application provision device 25A writes the acquired access token in the first storage management table 24J, and changes the appearance of the connection status button 242 and the connection status display field 243, to the appearance to be shown when the connection to the first storage service is established.

When the connection status button 242 is pressed, with the connection to the first storage service being established, the application provision device 25A causes the log-in user of the platform 20 to log out from the first storage service, and deletes the access token for the log-in user of the platform 20 from the first storage management table 24J. At the same time, the application provision device 25A changes the appearance of the connection status button 242 and the connection status display field 243, to the appearance to be shown when the connection to the first storage service is disconnected.

Likewise, when the connection status button 252 is pressed, without the connection to the second storage service being established, the application provision device 25A makes access to the second storage service, to display the log-in screen to the second storage service, on the web browser 75A. Accordingly, the log-in user of the platform 20 can log in to the second storage service, by inputting account information that allows the log-in user of the platform 20 to make connection to the second storage service, to the log-in screen of the second storage service.

Upon acquiring the access token from the second storage service, because of the log-in user of the platform 20 having logged in to the second storage service, the application provision device 25A writes the acquired access token in the second storage management table 24K, and changes the appearance of the connection status button 252 and the connection status display field 253, to the appearance to be shown when the connection to the first storage service is established.

When the connection status button 252 is pressed, with the connection to the first storage service being established, the application provision device 25A causes the log-in user of the platform 20 to log out from the second storage service, and deletes the access token for the log-in user of the platform 20 from the second storage management table 24K. At the same time, the application provision device 25A changes the appearance of the connection status button 252 and the connection status display field 253, to the appearance to be shown when the connection to the first storage service is disconnected.

Now, in the case of the aforementioned known technique, when the user intends to utilize a plurality of web applications, the user has to individually log in to each of the plurality of web applications. This is inconvenient to the user.

In contrast, the platform 20 according to the foregoing embodiment includes the application provision device 25A that allows the user who has logged in to the platform 20 to utilize a plurality of web applications. Therefore, when the user intends to utilize the plurality of web applications, there is no need for the user to log in to each of the plurality of web applications. As result, the convenience in use can be improved.

The platform 20 generates the webpage on which the settings related to the web application can be specified (see Fig. 14 and Fig. 16 to Fig. 23). Therefore, the convenience in use can be improved.

According to the foregoing embodiment, when one or more of the web applications under contract with the organization, to which the log-in user of the platform 20 belongs, are supporting a specific function (Yes at step S122, YES at step S133, YES at step S136, YES at step S143, YES at step S154, or YES at step S158), the platform 20 includes a specific region for specifying the settings related to the specific function, in the webpage (step S123, step S134, step S137, step S144, step S155, or step S159). In contrast, when none of the web applications under contract are supporting the specific function (NO at step S122, NO at step S13, NO at step S136, NO at step S143, NO at step S154, or NO at step S158), the platform 20 does not include the specific region in the webpage.

The mentioned arrangement facilitates the user to specify the settings that have to be specified, and also exempts the user from specifying the settings that are unnecessary to be specified. Therefore, the convenience in use can be improved.

According to the foregoing embodiment, in addition, when one or more of the web applications under contract with the organization, to which the log-in user of the platform 20 belongs, are supporting a specific function, the platform 20 includes, in the webpage, the specific setting buttons for including the specific regions for specifying the settings related to the specific function, in the webpage, so as to enable the user to operate the setting buttons, as shown in Fig. 14 and Fig. 18.

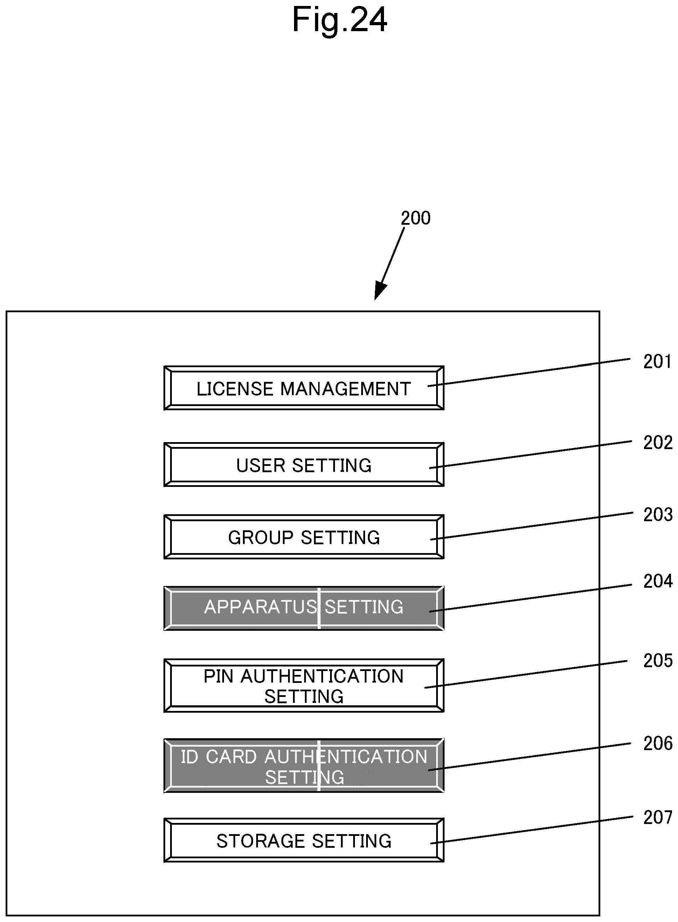

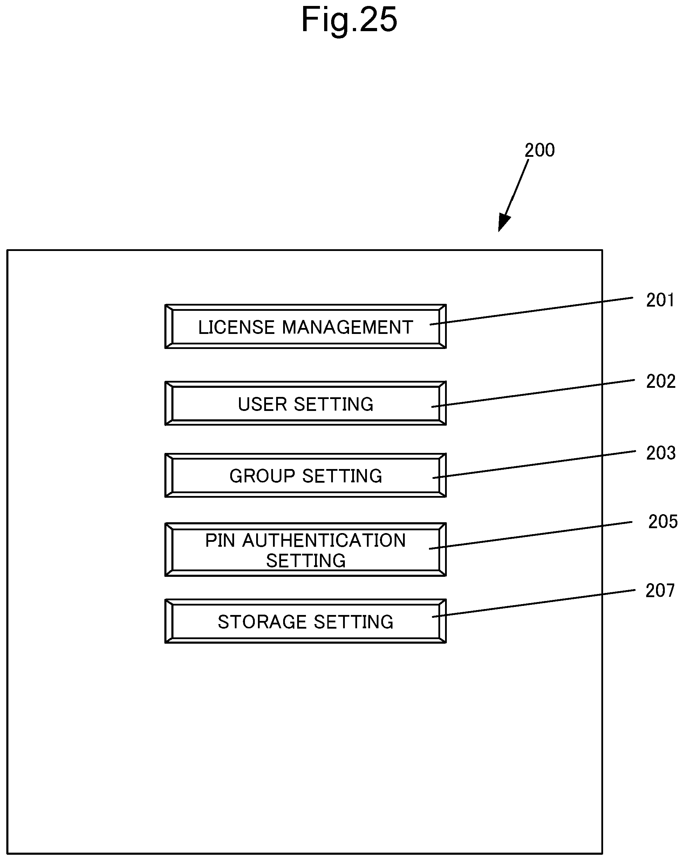

Here, when none of the web applications under contract are supporting the specific function, the platform 20 may include the specific setting buttons in the webpage, so as to disable the user from operating the buttons, as shown in Fig. 24, or exclude the specific setting buttons from the webpage, as shown in Fig. 25.

Fig. 24 presents an example of the managing user top screen 200, in which the apparatus setting button 204 and the ID card authentication setting button 206 are disabled from being operated.

As shown in Fig. 24, when none of the web applications under contract are supporting the apparatus management function, the application provision device 25A displays the apparatus setting button 204 in a grayed-out state, thereby making the apparatus setting button 204 inoperable. When none of the web applications under contract are supporting the ID card authentication function, the application provision device 25A displays the ID card authentication setting button 206 in a grayed-out state, thereby making the ID card authentication setting button 206 inoperable.

Likewise, when none of the web applications under contract are supporting the PIN authentication function, the application provision device 25A may display the PIN authentication setting button 205 in a grayed-out state, thereby making the PIN authentication setting button 205 inoperable. Further, when none of the web applications under contract are supporting the first storage utilization function, and none of the web applications under contract are supporting the second storage utilization function, the application provision device 25A may display the storage setting button 207 in a grayed-out state, thereby making the storage setting button 207 inoperable.

Although the above refers to the managing user top screen 200, the same also applies to the general user top screen 210.

Fig. 25 presents an example of the managing user top screen 200, from which the apparatus setting button 204 (see Fig. 14) and the ID card authentication setting button 206 (see Fig. 14) are excluded.

As shown in Fig. 25, when none of the web applications under contract are supporting the apparatus management function, the application provision device 25A erases the apparatus setting button 204 from the managing user top screen 200, and when none of the web applications under contract are supporting the ID card authentication function, the application provision device 25A erases the ID card authentication setting button 206, from the managing user top screen 200.

Likewise, when none of the web applications under contract are supporting the PIN authentication function, the application provision device 25A may erase the PIN authentication setting button 205 from the managing user top screen 200. Further, when none of the web applications under contract are supporting the first storage utilization function, and none of the web applications under contract are supporting the second storage utilization function, the application provision device 25A may erase the storage setting button 207 from the managing user top screen 200.

Although the above refers to the managing user top screen 200, the same also applies to the general user top screen 210.

Since the platform 20 includes the information indicating whether the settings have been specified, in the specific region (see Fig. 20, Fig. 21, and Fig. 23), the user can recognize the settings yet to be specified. Therefore, the convenience in use can be improved.

According to the foregoing embodiment, the platform 20 generates the webpage on which the user can specify the settings common to the print scan system 30, the document management system 40, and the document processing system 50, namely the password, the name, the e-mail address, and the position information of the user, in the user setting region. Such an arrangement eliminates the need to specify the same settings with respect to each of the print scan system 30, the document management system 40, and the document processing system 50, thereby improving the convenience in use.

According to the embodiment, the platform 20 generates the webpage on which the user can specify the settings common to the print scan system 30, the document management system 40, and the document processing system 50, namely the group name, and the user belonging to the group, in the group setting region. Such an arrangement eliminates the need to specify the same settings with respect to each of the print scan system 30, the document management system 40, and the document processing system 50, thereby improving the convenience in use.

According to the embodiment, the platform 20 generates the webpage on which the user can specify the settings common to the print scan system 30 and the document management system 40, namely whether the PIN authentication function may be utilized, in the PIN authentication setting region. Such an arrangement eliminates the need to specify the same settings with respect to each of the print scan system 30 and the document management system 40, thereby improving the convenience in use.

According to the embodiment, the platform 20 generates the webpage on which the user can specify the settings common to the print scan system 30 and the document processing system 50, namely whether the first storage service may be utilized, in the first storage setting region. Such an arrangement eliminates the need to specify the same settings with respect to each of the print scan system 30 and the document processing system 50, thereby improving the convenience in use.

According to the embodiment, the platform 20 generates the webpage on which the log-in user can specify the settings common to the print scan system 30, the document management system 40, and the document processing system 50, namely the password, the name, the e-mail address, and the position information of the log-in user, in the log-in user setting region. Such an arrangement eliminates the need to specify the same settings with respect to each of the print scan system 30, the document management system 40, and the document processing system 50, thereby improving the convenience in use.

According to the embodiment, further, the platform 20 generates the webpage on which the log-in user can specify the settings common to the print scan system 30 and the document management system 40, namely specifying the PIN code for the log-in user, in the log-in user PIN authentication setting region. Such an arrangement eliminates the need to specify the same settings with respect to each of the print scan system 30 and the document management system 40, thereby improving the convenience in use.

Still further, according to the embodiment, the platform 20 generates the webpage on which the log-in user can specify the settings common to the print scan system 30 and the document processing system 50, namely specifying the access token to the first storage service for the log-in user, in the first storage setting region. Such an arrangement eliminates the need to specify the same settings with respect to each of the print scan system 30 and the document processing system 50, thereby improving the convenience in use.

### Variations

Although the platform 20 is linked with three web applications, namely the print scan system 30, the document management system 40, and the document processing system 50, in the foregoing embodiment, the platform 20 may be linked with only two web applications, or with four or more web applications.

Although the platform 20 is linked with two storage services, namely the first storage service and the second storage service, in the embodiment, the platform 20 may be linked with a single storage service, or with three or more storage services.

## Claims

1. A platform (20) that serves as a basis for executing a plurality of web applications, the platform (20) comprising:
a storage device (24) that stores user identification information and available application information indicating a web application available to a user, in association with each other; and
a control device (25) including a processor, and configured to act, when the processor executes a control program, as an application provision device (25A) that allows a log-in user, who has logged in to the platform (20), to utilize at least one of the plurality of web applications, on a basis of the user identification information and the available application information,
wherein
the storage device (24) stores:
the user identification information and affiliated organization information indicating an organization to which the user belongs, in association with each other;
organization identification information, location information of the organization, and contract status information related to each of the plurality of web applications, in association with each other; and
prohibition information indicating, for each region, whether utilization of an external storage service is prohibited, and
the application provision device (25A):
identifies the organization to which the log-in user belongs on a basis of the user identification information and the affiliated organization information, and identifies a web application under contract with the identified organization on a basis of the organization identification information and the contract status information;
generates, when the identified web application supports the external storage service and when the prohibition information indicates that utilization of the external storage service is permitted in a region indicated by the location information of the organization, a webpage including a specific setting button for performing settings related to the external storage service; and
generates, when the identified web application supports the external storage service and when the prohibition information indicates that utilization of the external storage service is prohibited in the region indicated by the location information of the organization, a webpage not including the specific setting button, or including the specific setting button in a disabled state.

2. The platform (20) according to claim 1,
wherein the application provision device (25A) does not include the specific setting button in the webpage or includes the specific setting button in the disabled state, when the identified web application under contract does not support the external storage service.

3. The platform (20) according to claim 1,
wherein the application provision device (25A) includes information indicating whether the settings have been specified, in the webpage.

4. The platform (20) according to claim 1,
wherein the application provision device (25A) generates the webpage on which the settings common to the plurality of web applications can be specified.

5. A platform operating program being configured to cause, when a processor included in a computer that includes a storage device (24) that stores user identification information, and available application information indicating a web application available to a user, in association with each other, executes the platform operating program, the computer to:
realize a platform (20) serving as a basis for executing a plurality of web applications; and
act as an application provision device (25A) that allows a log-in user, who has logged in to the platform (20), to utilize at least one of the plurality of web applications, on a basis of the user identification information and the available application information,
wherein
the storage device (24) stores:
the user identification information and affiliated organization information indicating an organization to which the user belongs, in association with each other;
organization identification information, location information of the organization, and contract status information related to each of the plurality of web applications, in association with each other; and
prohibition information indicating, for each region, whether utilization of an external storage service is prohibited, and
the application provision device (25A):
identifies the organization to which the log-in user belongs on a basis of the user identification information and the affiliated organization information, and identifies a web application under contract with the identified organization on a basis of the organization identification information and the contract status information;
generates, when the identified web application supports the external storage service and when the prohibition information indicates that utilization of the external storage service is permitted in a region indicated by the location information of the organization, a webpage including a specific setting button for performing settings related to the external storage service; and
generates, when the identified web application supports the external storage service and when the prohibition information indicates that utilization of the external storage service is prohibited in the region indicated by the location information of the organization, a webpage not including the specific setting button, or including the specific setting button in a disabled state.

## Patentansprüche

1. Eine Plattform (20), die als Grundlage für die Ausführung einer Vielzahl von Webanwendungen dient, wobei die Plattform (20) umfasst:
eine Speichervorrichtung (24), die Benutzeridentifikationsdaten und Informationen zu verfügbaren Anwendungen, die eine für einen Benutzer verfügbare Webanwendung angeben, in Zuordnung zueinander speichert; und
eine Steuervorrichtung (25), die einen Prozessor umfasst und so konfiguriert ist, dass sie, wenn der Prozessor ein Steuerprogramm ausführt, als Anwendungsbereitstellungsvorrichtung (25A) fungiert, die es einem angemeldeten Benutzer, der sich bei der Plattform (20) angemeldet hat, ermöglicht, mindestens eine der Vielzahl von Webanwendungen auf der Grundlage der Benutzeridentifikationsdaten und der Informationen über verfügbare Anwendungen zu nutzen,
wobei
das Speichergerät (24) speichert:
die Benutzeridentifikationsdaten und die Daten zur zugehörigen Organisation, die die Organisation angeben, der der Benutzer angehört, in gegenseitiger Verknüpfung;
Organisationsidentifikationsdaten, Standortdaten der Organisation sowie Vertragsstatusdaten in Bezug auf jede der Vielzahl von Webanwendungen, miteinander verknüpft; und
Sperrdaten, die für jede Region angeben, ob die Nutzung eines externen Speicherdienstes untersagt ist, und
die Anwendungsbereitstellungsvorrichtung (25A):
identifiziert die Organisation, der der angemeldete Benutzer angehört, auf der Grundlage der Benutzeridentifikationsdaten und der Zugehörigkeitsdaten zur Organisation, und identifiziert eine Webanwendung, für die mit der identifizierten Organisation ein Vertrag besteht, auf der Grundlage der Organisationsidentifikationsdaten und der Vertragsstatusdaten;
erzeugt, wenn die identifizierte Webanwendung den externen Speicherdienst unterstützt und wenn die Verbotsinformationen angeben, dass die Nutzung des externen Speicherdienstes in einer durch die Standortinformationen der Organisation angegebenen Region zulässig ist, eine Webseite mit einer Schaltfläche für spezifische Einstellungen zur Durchführung von Einstellungen im Zusammenhang mit dem externen Speicherdienst; und
erzeugt, sofern die identifizierte Webanwendung den externen Speicherdienst unterstützt und die Sperrinformationen darauf hinweisen, dass die Nutzung des externen Speicherdienstes in der Region, die durch die Standortinformationen der Organisation angegeben wird, untersagt ist, eine Webseite, die die Schaltfläche für die spezifische Einstellung nicht enthält oder die diese Schaltfläche in einem deaktivierten Zustand enthält.

2. Die Plattform (20) nach Anspruch 1,
wobei die Anwendungsbereitstellungsvorrichtung (25A) die spezifische Einstellungsschaltfläche auf der Webseite nicht enthält oder die spezifische Einstellungsschaltfläche im deaktivierten Zustand enthält, wenn die identifizierte vertraglich vereinbarte Webanwendung den externen Speicherdienst nicht unterstützt.

3. Die Plattform (20) nach Anspruch 1,
wobei die Anwendungsbereitstellungsvorrichtung (25 A) Informationen enthält, die angeben, ob die Einstellungen in der Webseite festgelegt wurden.

4. Die Plattform (20) nach Anspruch 1,
wobei die Anwendungsbereitstellungsvorrichtung (25 A) die Webseite erzeugt, auf der die für die Vielzahl von Webanwendungen gemeinsamen Einstellungen festgelegt werden können.

5. Ein Plattformbetriebssystem, das so konfiguriert ist, dass es bewirkt, dass, wenn ein Prozessor in einem Computer, der eine Speichervorrichtung (24) enthält, die Benutzeridentifikationsdaten sowie Informationen über verfügbare Anwendungen, die eine für einen Benutzer verfügbare Webanwendung angeben, in Verbindung miteinander speichert, das Plattformbetriebssystem ausführt, der Computer:
eine Plattform (20) zu realisieren, die als Grundlage für die Ausführung einer Vielzahl von Webanwendungen dient; und
als Anwendungsbereitstellungsvorrichtung (25 A) zu fungieren, die es einem angemeldeten Benutzer, der sich bei der Plattform (20) angemeldet hat, ermöglicht, mindestens eine der Vielzahl von Web-Anwendungen auf der Grundlage der Benutzeridentifikationsinformationen und der Informationen über verfügbare Anwendungen zu nutzen,
wobei
das Speichergerät (24) speichert:
die Benutzeridentifikationsdaten und die Daten zur zugehörigen Organisation, die die Organisation angeben, der der Benutzer angehört, in gegenseitiger Verknüpfung;
Organisationsidentifikationsdaten, Standortdaten der Organisation sowie Vertragsstatusdaten in Bezug auf jede der mehreren Webanwendungen, in gegenseitiger Verknüpfung; und
Sperrdaten, die für jede Region angeben, ob die Nutzung eines externen Speicherdienstes untersagt ist, und
die Anwendungsbereitstellungsvorrichtung (25A):
identifiziert die Organisation, der der angemeldete Benutzer angehört, auf der Grundlage der Benutzeridentifikationsdaten und der Zugehörigkeitsdaten zur Organisation, und identifiziert eine Webanwendung, für die mit der identifizierten Organisation ein Vertrag besteht, auf der Grundlage der Organisationsidentifikationsdaten und der Vertragsstatusdaten;
erzeugt, wenn die identifizierte Webanwendung den externen Speicherdienst unterstützt und wenn die Verbotsinformationen angeben, dass die Nutzung des externen Speicherdienstes in einer durch die Standortinformationen der Organisation angegebenen Region zulässig ist, eine Webseite mit einer Schaltfläche für spezifische Einstellungen zur Durchführung von Einstellungen im Zusammenhang mit dem externen Speicherdienst; und
erzeugt, sofern die identifizierte Webanwendung den externen Speicherdienst unterstützt und die Sperrinformationen darauf angeben, dass die Nutzung des externen Speicherdienstes in der Region, die durch die Standortinformationen der Organisation angegeben wird, untersagt ist, eine Webseite, die die Schaltfläche für die spezifische Einstellung nicht enthält oder die diese Schaltfläche in einem deaktivierten Zustand enthält.

## Revendications

1. Une plateforme (20) qui sert de base pour exécuter une pluralité d'applications web,
la plateforme (20) comprenant :
un dispositif de stockage (24) qui stocke des informations d'identification d'utilisateur et des informations d'application disponible indiquant une application web disponible pour un utilisateur, en association les unes avec les autres ; et
un dispositif de commande (25) comprenant un processeur, et configuré pour agir, lorsque le processeur exécute un programme de commande, en tant que dispositif de fourniture d'application (25A) qui permet à un utilisateur connecté, qui s'est connecté à la plateforme (20), d'utiliser au moins une application de la pluralité d'applications web, sur la base des informations d'identification d'utilisateur et des informations d'application disponible,
dans laquelle le dispositif de stockage (24) stocke:
les informations d'identification d'utilisateur et des informations d'organisation affiliée indiquant une organisation à laquelle appartient l'utilisateur, en association les unes avec les autres ;
des informations d'identification d'organisation, des informations de localisation de l'organisation, et des informations d'état de contrat liées à chaque application de la pluralité d'applications web, en association les unes avec les autres ; et des informations d'interdiction indiquant, pour chaque région, si l'utilisation d'un service de stockage externe est interdite, et
le dispositif de fourniture d'application (25A):
identifie l'organisation à laquelle appartient l'utilisateur connecté sur la base des informations d'identification d'utilisateur et des informations d'organisation affiliée, et identifie une application web sous contrat avec l'organisation identifiée sur la base des informations d'identification d'organisation et des informations d'état de contrat ;
génère, lorsque l'application web identifiée prend en charge le service de stockage externe et lorsque les informations d'interdiction indiquent que l'utilisation du service de stockage externe est autorisée dans une région indiquée par les informations de localisation de l'organisation, une page web comprenant un bouton de réglage spécifique pour effectuer des réglages relatifs au service de stockage externe ; et
génère, lorsque l'application web identifiée prend en charge le service de stockage externe et lorsque les informations d'interdiction indiquent que l'utilisation du service de stockage externe est interdite dans la région indiquée par les informations de localisation de l'organisation, une page web ne comprenant pas le bouton de réglage spécifique, ou comprenant le bouton de réglage spécifique dans un état désactivé.

2. La plateforme (20) selon la revendication 1,
dans laquelle le dispositif de fourniture d'application (25A) n'inclut pas le bouton de réglage spécifique dans la page web ou inclut le bouton de réglage spécifique dans l'état désactivé, lorsque l'application web identifiée sous contrat ne prend pas en charge le service de stockage externe.

3. La plateforme (20) selon la revendication 1,
dans laquelle le dispositif de fourniture d'application (25A) inclut, dans la page web, des informations indiquant si les réglages ont été spécifiés.

4. La plateforme (20) selon la revendication 1,
dans laquelle le dispositif de fourniture d'application (25A) génère la page web sur laquelle les réglages communs à la pluralité d'applications web peuvent être spécifiés.

5. Un programme d'exploitation de plateforme étant configuré pour amener, lorsqu'un processeur inclus dans un ordinateur qui comprend un dispositif de stockage (24) qui stocke des informations d'identification d'utilisateur et des informations d'application disponible indiquant une application web disponible pour un utilisateur, en association les unes avec les autres, exécute le programme d'exploitation de plateforme, l'ordinateur à :
réaliser une plateforme (20) servant de base pour exécuter une pluralité d'applications web ; et
agir en tant que dispositif de fourniture d'application (25A) qui permet à un utilisateur connecté, qui s'est connecté à la plateforme (20), d'utiliser au moins une application de la pluralité d'applications web, sur la base des informations d'identification d'utilisateur et des informations d'application disponible,
dans laquelle le dispositif de stockage (24) stocke :
les informations d'identification d'utilisateur et des informations d'organisation affiliée indiquant une organisation à laquelle appartient l'utilisateur, en association les unes avec les autres ;
des informations d'identification d'organisation, des informations de localisation de l'organisation, et des informations d'état de contrat liées à chaque application de la pluralité d'applications web, en association les unes avec les autres ; et
des informations d'interdiction indiquant, pour chaque région, si l'utilisation d'un service de stockage externe est interdite, et
le dispositif de fourniture d'application (25A) :
identifie l'organisation à laquelle appartient l'utilisateur connecté sur la base des informations d'identification d'utilisateur et des informations d'organisation affiliée, et identifie une application web sous contrat avec l'organisation identifiée sur la base des informations d'identification d'organisation et des informations d'état de contrat ;
génère, lorsque l'application web identifiée prend en charge le service de stockage externe et lorsque les informations d'interdiction indiquent que l'utilisation du service de stockage externe est autorisée dans une région indiquée par les informations de localisation de l'organisation, une page web comprenant un bouton de réglage spécifique pour effectuer des réglages relatifs au service de stockage externe ; et
génère, lorsque l'application web identifiée prend en charge le service de stockage externe et lorsque les informations d'interdiction indiquent que l'utilisation du service de stockage externe est interdite dans la région indiquée par les informations de localisation de l'organisation, une page web ne comprenant pas le bouton de réglage spécifique, ou comprenant le bouton de réglage spécifique dans un état désactivé.
